Europäisches Patentamt

European Patent Office

Office européen des brevets

(19)

(11) EP 1 189 203 B1

(12) EUROPEAN PATENT SPECIFICATION

(45) Date of publication and mention
of the grant of the patent:
**17.05.2006 Bulletin 2006/20**

(51) Int Cl.:
*G10L 15/18* (2006.01)

(21) Application number: **01307935.5**

(22) Date of filing: **18.09.2001**

(54) **Homophone selection in speech recognition**

Homophonewahl in der Spracherkennung

Sélection d'homophones en reconnaissance de parole

(84) Designated Contracting States:
**AT BE CH CY DE DK ES FI FR GB GR IE IT LI LU MC NL PT SE TR**

(30) Priority: **18.09.2000 US 664545**

(43) Date of publication of application:
**20.03.2002 Bulletin 2002/12**

(73) Proprietor: **L & H Holdings USA, Inc.
Burlington,
Massachusetts 01803 (US)**

(72) Inventors:
• **van Even, Stijn
Jamaica Plain,
Massachusetts 02130 (US)**

• **Divay, Olivier
Arlington,
Massachusetts 02474 (US)**
• **Renaud, Francoise
Medford,
Massachusetts 02155 (US)**

(74) Representative: **Howe, Steven
Lloyd Wise
Commonwealth House,
1-19 New Oxford Street
London WC1A 1LW (GB)**

(56) References cited:
**WO-A-99/16051                FR-A- 2 735 268
US-A- 5 752 230**

**Description**

### TECHNICAL FIELD

This invention relates to computer-implemented speech recognition, and more particularly to selection of homophones in utterances.

### BACKGROUND

A speech recognition system analyzes a user's speech to determine what the user said. Most speech recognition systems are frame-based. In a frame-based system, a processor divides a signal descriptive of the speech to be recognized into a series of digital frames, each of which corresponds to a small time increment of the speech.

A speech recognition system may be a "discrete" system that recognizes discrete words or phrases but which requires the user to pause briefly between each discrete word or phrase. Alternatively, a speech recognition system may be a "continuous" system that can recognize spoken words or phrases regardless of whether the user pauses between them. Continuous speech recognition systems typically have a higher incidence of recognition errors in comparison to discrete recognition systems due to complexities of recognizing continuous speech.

In general, the processor of a continuous speech recognition system analyzes "utterances" of speech. An utterance includes a variable number of frames and corresponds, for example, to a period of speech followed by a pause of at least a predetermined duration.

The processor determines what the user said by finding acoustic models that best match the digital frames of an utterance, and by identifying text that corresponds to those acoustic models. An acoustic model may correspond to a word, phrase or command from a vocabulary. An acoustic model also may represent a sound, or phoneme, that corresponds to a portion of a word. Collectively, the constituent phonemes for a word represent the phonetic spelling of the word. Acoustic models also may represent silence and various types of environmental noise. In general, the processor may identify text that corresponds to the best. matching acoustic models by reference to phonetic word models in an active vocabulary of words and phrases.

The words or phrases corresponding to the best matching acoustic models are referred to as recognition candidates. The processor may produce a single recognition candidate for an utterance, or may produce a list of recognition candidates.

### SUMMARY

Incorrect text associated with recognition errors in computer-implemented speech recognition is corrected by performing speech recognition on an utterance to produce a recognition result for the utterance. A correction command is identified in the recognition result for the utterance. The correction command includes a set of one or more words from a prior recognition result, and an affix that may be combined with the set of one or more words to form a homophone of the one or more words. The homophone is generated from the set of one or more words and the affix based on features of one or more words from the prior recognition result that are not included in the set of one or more words.

Embodiments may include one or more of the following features. For example, the set of one or more words from the prior recognition result may be replaced with the homophone.

Generating the homophone from the set of one or more words and the affix may include combining the set of one or more words and the affix in such a way as to match the features of the one or more words from the prior recognition result with the homophone. Generating the homophone may include presenting a list of possible homophones, and receiving a selection of one homophone from the list.

The correction command may include "ecrire <word> <ending>," where <word> represents the set of one or more words from the prior recognition result and <ending> represents the affix. The set of one or more words may include only one word and the affix is an ending.

The homophone may be pronounced exactly the same as the set of one or more words from the prior recognition result. The one or more phonemes of the homophone may be included in the set of one or more words from the prior recognition result.

The homophone includes a set of one or more words. The affix may be an ending (that is, a suffix), or the affix may be a prefix.

The details of one or more embodiments of the invention, as defined by the appended independent claims, are set forth in the accompanying drawings and the description below. Other features, objects, and advantages of the invention will be apparent from the description and drawings, and from the claims. Examples of prior art approaches to tackle homophone recognition problems can be found in e.g. FR 2 735 268 and WO 99/16051.

**DESCRIPTION OF DRAWINGS**

Fig. 1 is a block diagram of a speech recognition system.

Fig. 2 is a block diagram of speech recognition software of the system of Fig. 1.

Fig. 3 is a flow chart of a signal processing procedure performed by the software of Fig. 2.

Figs. 4A and 4B are state diagrams of a constraint grammar.

Fig. 5 is a graph of a lexical tree.

Fig. 6 is a graph of a portion of the lexical tree of Fig. 5.

Fig. 7 is a flow chart of a pre-filtering procedure performed by the software of Fig. 2.

Figs. 8A, 8B and 8C are state graphs representing nodes of the lexical tree of Fig. 5.

Figs. 9 and 10 are charts of scores corresponding to the states of the state graphs of Figs. 8A, 8B and 8C.

Fig. 11 is a flow chart of a procedure for processing nodes of a lexical tree.

Fig. 12 is a flow chart of a speech recognition procedure.

Figs. 13A and 13B are block diagrams of a complete dictation vocabulary that does (Fig. 13B) and does not (Fig. 13A) include word fragments.

Figs. 14A and 14B are block diagrams of a complete dictation vocabulary for the French language that does (Fig. 14B) and does not (Fig. 14A) include word fragments.

Fig. 14C is a block diagram of the word fragment component of the vocabulary of Fig. 14B.

Figs. 15A and 15B are block diagrams of a complete dictation vocabulary for the U.S. English language that does (Fig. 15B) and does not (Fig. 15A) include word fragments.

Fig. 15C is a block diagram of the word fragment component of the vocabulary of Fig. 15B.

Fig. 16A is a flow chart of a procedure for generating word fragments that will be used in a speech recognition system.

Fig. 16B is a flow chart of a procedure for using generated word fragments in the speech recognition system.

Fig. 17 is a flow chart of a procedure for speech recognition using a homophone correction command.

Figs. 18A-D show screen displays of a user interface of the speech recognition system using the procedure of Fig. 17.

Fig. 19 is a flow chart of a procedure for correcting homophones in speech recognition.

Figs. 20A, 20B, 21A, 21B, and 22A-D are charts showing correction of recognition candidates using the procedure of Fig. 19.

Like reference symbols in the various drawings indicate like elements.

**DETAILED DESCRIPTION**

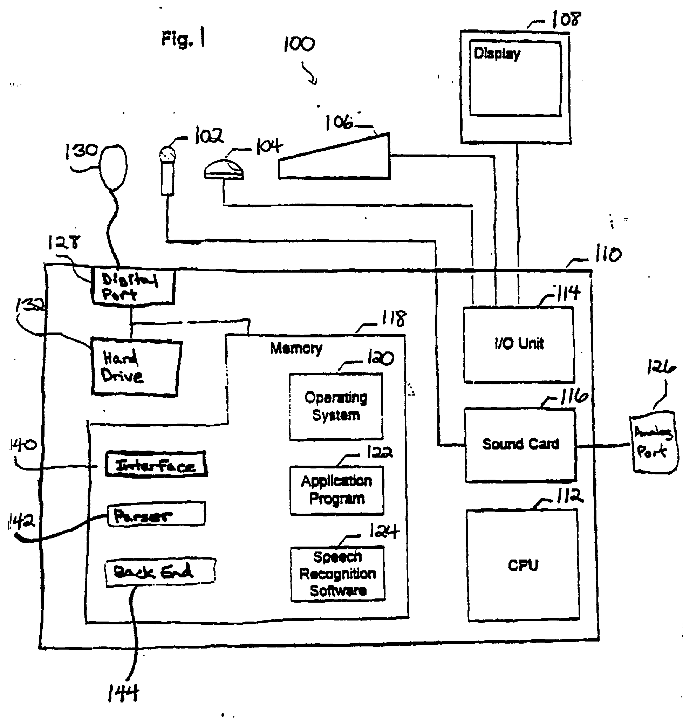

A speech recognition system uses word features and phrases in a recognition candidate to correct homophone errors. As background information for the discussion of correction of homophones, a speech recognition system that does not use a homophone correction command is discussed with reference to Figs. 1-16B.

Referring to Fig. 1, a speech recognition system 100 includes input/output (I/O) devices (for example, microphone 102, mouse 104, keyboard 106, and display 108) and a computer 110 having a processor 112, an I/O unit 114 and a sound card 116. A memory 118 stores data and programs such as an operating system 120, an application program 122 (for example, a word processing program), and speech recognition software 124.

A computer suitable for one implementation of the system includes a 700 MHz Pentiumnf processor, 128 MB memory, 12 GB of available hard drive space. The computer may run Windows 95, Windows 98, Windows2000 or Windows NT 4.0 as an operating system or any other suitable operating system.

The computer 110 may be used for traditional speech recognition. In this case, the microphone 102 receives the user's speech and conveys the speech, in the form of an analog signal, to the sound card 116, which in turn passes the signal through an analog-to-digital (A/D) converter to transform the analog signal into a set of digital samples. Under control of the operating system 120 and the speech recognition software 124, the processor 112 identifies utterances in the user's continuous speech. Utterances are separated from one another by a pause having a sufficiently large, predetermined duration (for example, 160-250 milliseconds). Each utterance may include one or more words of the user's speech.

The system also may include an analog recorder port 126 and/or a digital recorder port 128. The analog recorder port 126 is connected to the sound card 116 and is used to transmit speech recorded using an analog or digital hand-held recorder to the sound card. The analog recorder port 126 may be implemented using a line in port. The hand-held recorder is connected to the port using a cable connected between the line in port and a line out or speaker port of the recorder. The analog recorder port 126 may be implemented as a microphone positioned so as to be next to the speaker of the hand-held recorder when the recorder is inserted into the port 126, and also may be implemented using the microphone 102. Alternatively, the analog recorder port 126 may be implemented as a tape player that receives a tape recorded using a hand-held recorder and transmits information recorded on the tape to the sound card 116.

The digital recorder port 128 may be implemented to transfer a digital file generated using a hand-held digital recorder 130. This file may be transferred directly into memory 118, or to a storage device such as bard drive 132. The digital recorder port 128 may be implemented as a storage device (for example floppy drive or CD-ROM drive) of the computer 110.

To implement the speech recognition and processing functions of the system 100, the computer 110 runs interface software 140, the speech recognition software 124, a parser 142, and back-end software 144. Dragon NaturallySpeaking Preferred Edition 3.1, available from Dragon Systems, Inc. of Newton, Massachusetts, offers one example of suitable speech recognition software. The interface software 140 provides a user interface for controlling the transfer of data from the digital recorder and the generation of action items for use by the back-end software 144. In general, the user interface may be controlled using input devices such as a mouse or keyboard, or using voice commands processed by the speech recognition software 124.

After transferring data from the recorder, the interface software 140 provides the digital samples for an action item to the speech recognition software 124. If the digital samples have been stored using compression techniques, the interface software 140 decompresses them prior to providing them to the speech recognition software. In general, the speech recognition software analyzes the digital samples to produce a sequence of text, and provides this sequence to the interface software 140. The interface software 140 then transfers the text and the associated time stamp, if any, to the parser 142, which processes the text in conjunction with the time stamp to generate a parsed version of the action item. The parser returns the parsed action item to the interface software, which displays it to the user. After any editing by the user, and with user approval, the interface software then transfers the action item to the appropriate back-end software 144. An example of back-end software with which the system works is personal information management software, such as Microsoft Outlook, which is available from Microsoft Corporation of Redmond, Washington. Other suitable back-end software includes contact management software, time management software, expense reporting applications, electronic mail programs, and fax programs.

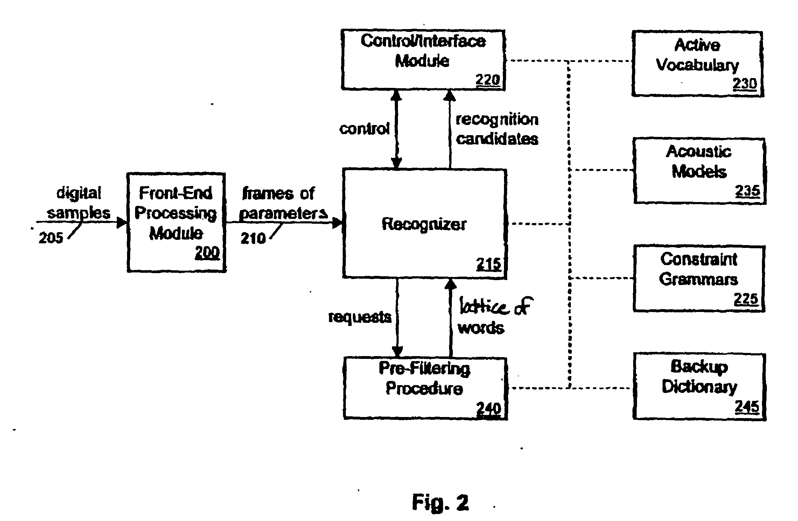

Fig. 2 illustrates components of the speech recognition software 124. For case of discussion, the following description indicates that the components carry out operations to achieve specified results. However, it should be understood that each component actually causes the processor 112 to operate in the specified manner.

Initially, a front end processing module 200 converts the digital samples 205 from the sound card 116 (or from the digital recorder port 128) into frames of parameters 210 that represent the frequency content of an utterance, Each frame includes 24 parameters and represents a short portion (for example, 10 milliseconds) of the utterance.

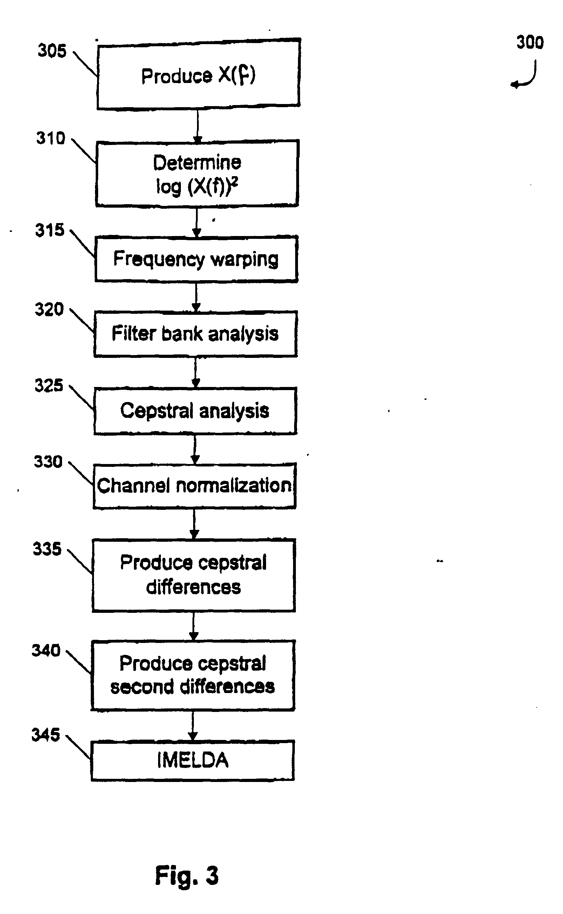

As shown in Fig. 3, the front end processing module 200 produces a frame from digital samples according to a procedure 300. The module first produces a frequency domain representation $X(f)$ of the portion of the utterance by performing a Fast Fourier Transform (FFT) on the digital samples (step 305). Next, the module determines $\log(X(f))^2$ (step 310). The module may then perform frequency warping (step 315) and a filter bank analysis (step 320) to achieve speaker normalization. See S. Wegmann et al., "Speaker Normalization on Conversational Speech," Proc. 1996 ICASSP, pp. I.339-I.341.

From the normalized results, the module performs cepstral analysis to produce twelve cepstral parameters (step 325). The module generates the cepstral parameters by performing an inverse cosine transformation on the logarithms of the frequency parameters. Cepstral parameters and cepstral differences (described below) have been found to emphasize information important to speech recognition more effectively than do the frequency parameters. After performing channel normalization of the cepstral parameters (step 330), the module produces twelve cepstral differences (that is, the differences between cepstral parameters in successive frames) (step 335) and twelve cepstral second differences (that is, the differences between cepstral differences in successive frames) (step 340). Finally, the module performs an IMELDA linear combination transformation to select the twenty-four most useful parameters from the twelve cepstral parameters, the twelve cepstral differences, and the twelve cepstral second differences (step 345).

Referring again to Fig. 2, a recognizer 215 receives and processes the frames of an utterance to identify text corresponding to the utterance. The recognizer entertains several hypotheses about the text and associates a score with each hypothesis. The score reflects the probability that a hypothesis corresponds to the user's speech. For ease of processing, scores are maintained as negative logarithmic values. Accordingly, a lower score indicates a better match (a high probability) while a higher score indicates a less likely match (a lower probability), with the likelihood of the match decreasing as the score increases. After processing the utterance, the recognizer provides the best-scoring hypotheses to the control/interface module 220 as a list of recognition candidates, where each recognition candidate corresponds to a hypothesis and has an associated score. Some recognition candidates may correspond to text while other recognition candidates correspond to commands. Commands may include words, phrases, or sentences.

The recognizer 215 processes the frames 210 of an utterance in view of one or more constraint grammars 225. A constraint gammar, also referred to as a template or restriction rule, may be a limitation on the words that may correspond to an utterance, a limitation on the order or grammatical form of the words, or both. For example, a constraint grammar for menu-manipulation commands may include only entries from the menu (for example, "file", "edit") or command words for navigating through the menu (for example, "up", "down", "top", "bottom"). Different constraint grammars may be active at different times. For example, a constraint grammar may be associated with a particular application program 122 and may be activated when the user opens the application program and deactivated when the user doses the application program. The recognizer 215 discards any hypothesis that does not comply with an active constraint grammar. In addition, the recognizer 215 may adjust the score of a hypothesis associated with a particular constraint grammar based on characteristics of the constraint grammar.

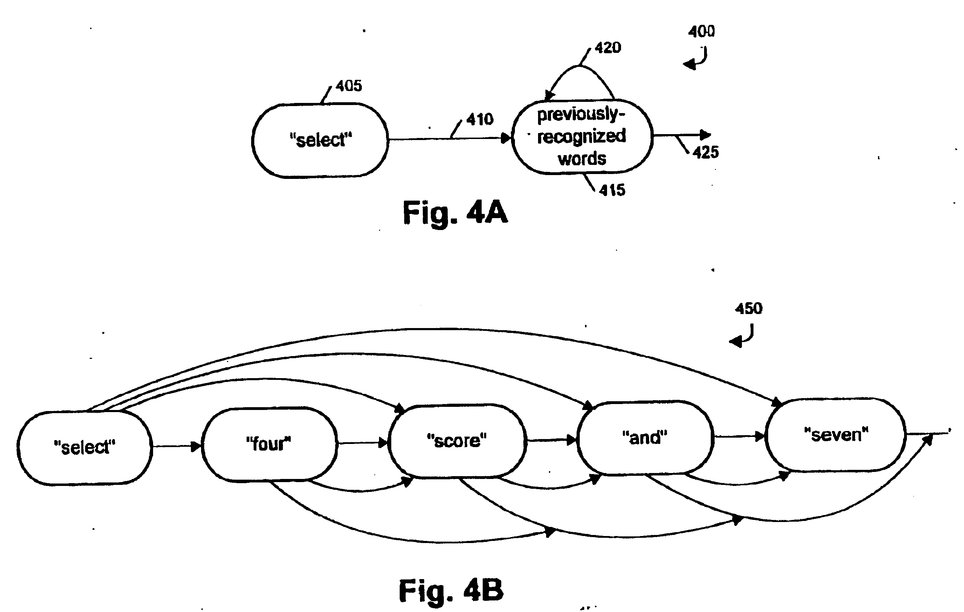

Fig. 4A illustrates an example of a constraint grammar for a "select" command used to select previously recognized text. As shown, a constraint grammar may be illustrated as a state diagram 400. The "select" command includes the word "select" followed by one or more previously-recognized words, with the words being in the order in which they were previously recognized. The first state 405 of the constraint grammar indicates that the first word of the select command must be "select". After the word "select", the constraint grammar permits a transition along a path 410 to a second state 415 that requires the next word in the command to be a previously-recognized word. A path 420, which returns to the second state 415, indicates that the command may include additional previously-recognized words. A path 425, which exits the second state 415 and completes the command, indicates that the command may include only previously-recognized words. Fig. 4B illustrates the state diagram 450 of the constraint grammar for the select command when a previously-recognized utterance is "four score and seven". This state diagram could be expanded to include words from additional utterances. The "select" command and techniques for generating its constraint grammar are described further in U.S. Patent No. 5,794,189, titled "CONTINUOUS SPEECH RECOGNITION" and issued August 11, 1998.

The constraint grammar also may be expressed in Backus-Naur Form (BNF) or Extended BNF (EBNF). In EBNF, the grammar for the "Select" command is:

recognition result> ::= Select <words>,

where

$$<\text{words}> ::= [PRW^1[PRW^2[PRW^3 \ldots PRW^n]]] \;|$$

$$[PRW^2[PRW^3 \ldots PRW^n]] \;| \ldots [PRW^n],$$

"$PRW^i$" is the previously-recognized word i,

[ ] means optional,

< > means a rule,

| means an OR function, and

::= means "is defined as" or "is".

As illustrated in Figs. 4A and 4B, this notation indicates that "select" may be followed by any ordered sequence of previously-recognized words. This grammar does not permit optional or alternate words. In some instances, the grammar may be modified to permit optional words (for example, an optional "and" to permit "four score and seven" or "four score seven") or alternate words or phrases (for example, "four score and seven" or "eighty seven"). Constraint grammars are discussed further in U.S. Patent No. 5,799,279, titled "CONTINUOUS RECOGNITION OF SPEECH AND COMMANDS" and issued August 25, 1998.

Another constraint grammar 225 that may be used by the speech recognition software 124 is a large vocabulary dictation grammar. The large vocabulary dictation grammar identifies words included in the active vocabulary 230, which is the vocabulary of words known to the software. The large vocabulary dictation grammar also indicates the frequency with which words occur. A language model associated with the large vocabulary dictation grammar may be a unigram model that indicates the frequency with which a word occurs independently of context, or a bigram model that indicates the frequency with which a word occurs in the context of a preceding word. For example, a bigram model may indicate that a noun or adjective is more likely to follow the word "the" than is a verb or preposition.

Other constraint grammars 225 include an in-line dictation macros grammar for dictation commands, such as "CAP" or "Capitalize" to capitalize a word and "New-Paragraph" to start a new paragraph; the select X Y Z grammar discussed above and used in selecting text; an error correction commands grammar, a dictation editing grammar; an application command and control grammar that may be used to control a particular application program 122; a global command and control grammar that may be used to control the operating system 120 and the speech recognition software 124; a menu and dialog tracking grammar that may be used to manipulate menus; and a keyboard control grammar that permits the use of speech in place of input devices, such as the keyboard 106 or the mouse 104.

The active vocabulary 230 uses a pronunciation model in which each word is represented by a series of phonemes that make up the phonetic spelling of the word. Each phoneme may be represented as a triphone that includes three nodes. A triphone is a context-dependent phoneme. For example, the triphone "*abc*" represents the phoneme "*b*" in the context of the phonemes "*a*" and "*c*", with the phoneme "*b*" being preceded by the phoneme "*a*" and followed by the phoneme "*c*".

One or more vocabulary files may be associated with each user. The vocabulary files contain all of the words; pronunciations and language model information for the user. Dictation and command grammars may be split between vocabulary files to optimize language model information and memory use, and to keep each single vocabulary file under a size limit, for example, 64,000 words. There also is a set of system vocabularies.

Separate acoustic models 235 arc provided for each user of the system. Initially, speaker-independent acoustic models of male or female speech are adapted to a particular user's speech using an enrollment program. The acoustic models may be further adapted as the system is used. The acoustic models are maintained in a file separate from the active vocabulary 230.

The acoustic models 235 represent phonemes. In the case of tiriphones, the acoustic models 235 represent each triphone node as a mixture of Gaussian probability density functions ("PDFs"). For example, node "*i*" of a triphone "*abc*" may be represented as $ab'c$:

$$ab'c = \sum_k w_k N(\mu_k, c_k),$$

where each $w_k$ is a mixture weight,

$$\sum_k w_k = 1,$$

$\mu_k$ is a mean vector for the probability density function ("PDF") $N_k$, and $c_k$ is the covariance matrix for the PDF $N_k$. Like the frames in the sequence of frames, the vectors $\mu_k$ each include twenty four parameters. The matrices $c_k$ are twenty four by twenty four matrices. Each triphone node may be represented as a mixture of up to, for example, sixteen different PDFs.

A particular PDF may be used in the representation of multiple triphone nodes. Accordingly, the acoustic models 235 represent each triphone node as a collection of mixture weights $w_k$ associated with up to sixteen different PDFs $N_k$ and separately represent each PDF $N_k$ using a mean vector $\mu_k$ and a covariance matrix $c_k$. Use of a particular PDF to represent multiple triphone nodes permits the models to include a smaller number of PDFs than would be required if each triphone node included entirely separate PDFs. Since the English language may be roughly represented using 43 different phonemes, there may be up to 79,507 ($43^3$) different triphones, which would result in a huge number of PDFs if each triphone node were represented by a separate set ofPDFs. Representing multiple nodes with common PDFs also may remedy or reduce a data sparsity problem that results because some triphones (for example, "tzp" in the English language) rarely occur. These rare triphones may be represented by having closely-related triphones share the same set of PDFs.

A large vocabulary dictation grammar may include multiple dictation topics (for example, "medical" or "legal"), each having its own vocabulary file and its own language model. A dictation topic includes a set of words that represents the active vocabulary 230. In a typical example, a topic may include approximately 30,000 words that are considered for normal recognition.

A complete dictation vocabulary consists of the active vocabulary 230 plus a backup vocabulary 245. The backup vocabulary may include files that contain user-specific backup vocabulary words and system-wide backup vocabulary words.

User-specific backup vocabulary words include words that a user has created while using the speech recognition software. These words are stored in vocabulary files for the user and for the dictation topic, and are available as part of the backup dictionary for the dictation topic regardless of user, and to the user regardless of which dictation topic is being used. For example, if a user is using a medical topic and adds the word "ganglion" to the dictation vocabulary, any other user of the medical topic will have immediate access to the word "ganglion". In addition, the word will be written into the user-specific backup vocabulary. Then, if the user says "ganglion" while using a legal topic, the word "ganglion" will be available during correction from the backup dictionary.

In addition to the user-specific backup vocabulary noted above, there is a system-wide backup vocabulary.

The system-wide backup vocabulary contains all the words known to the system, including words that may currently be in an active vocabulary.

Referring again to Fig. 2, the recognizer 215 may operate in parallel with a pre-filtering procedure 240. Upon initiating processing of an utterance, the recognizer 215 requests from the pre-filtering procedure 240 a list of words that may have been spoken as the first word of the utterance (that is, words that may correspond to the first and subsequent frames of the utterance). The pre-filtering procedure 240 performs a coarse comparison of the sequence of frames with the active vocabulary 230 to identify a subset of the vocabulary for which a more extensive comparison using the recognizer is justified.

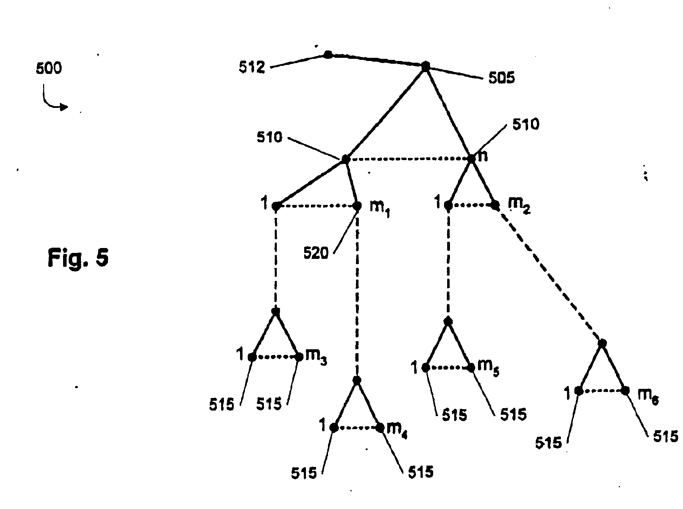

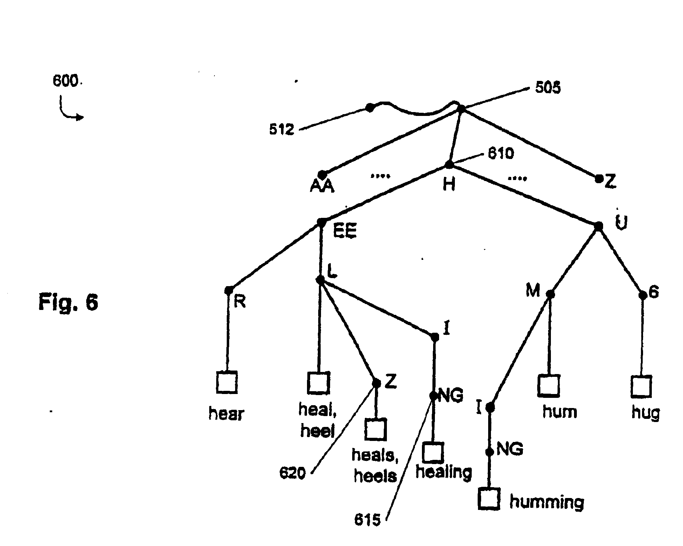

Referring to Figs. 5 and 6, the pre-filtering procedure 240 uses a lexical tree 500 that is initialized before processing begins. The lexical tree represents the active vocabulary 230 based on the phonetic relafonships between words in the vocabulary. The lexical tree based on the phonetic relationships between words in the vocabulary. The lexical tree includes a root node 505 that represents new words entering the lexical tree. From the root node 505, the tree expands to a group 510 of nodes that correspond to phonemes with which words start. A silence node 512 that represents silence also may be reached from the root node 505.

Each node in the group 510 represents a phoneme that appears at the beginning of one or more words. For example, in the portion 600 of the lexical tree 500 illustrated in Fig. 6, a node 610 corresponds to all words in the vocabulary that start with the phoneme "H". Together, the nodes in the group 510 include representations of the starting phoneme of every word in the vocabulary.

The lexical tree continues to expand until it reaches leaf nodes 515 that represent the actual words of the vocabulary. For example, as indicated by the square marker, leaf node 615 of Fig. 6 corresponds to the word "healing". An internal node of the tree also may represent a word of the vocabulary. For example, the node 520 might represent a particular vocabulary word in addition to representing the first two phonemes of other vocabulary words. Similarly, the leaf node 620 of Fig. 6 corresponds to the words "heal" and "heel" while also corresponding to the first three phonemes of the words "heals", "heels" and "healing". Node 620 also illustrates that, since multiple words may have the same phonetic spelling, a leaf node may correspond to more than one word. As illustrated in Fig. 6, leaf nodes may appear at different levels within the lexical tree. Leaf nodes also may correspond to commands. For example, a leaf node may correspond to the word "select" and to the command "SELECT". As noted above, commands may be associated with particular constraint grammars 225.

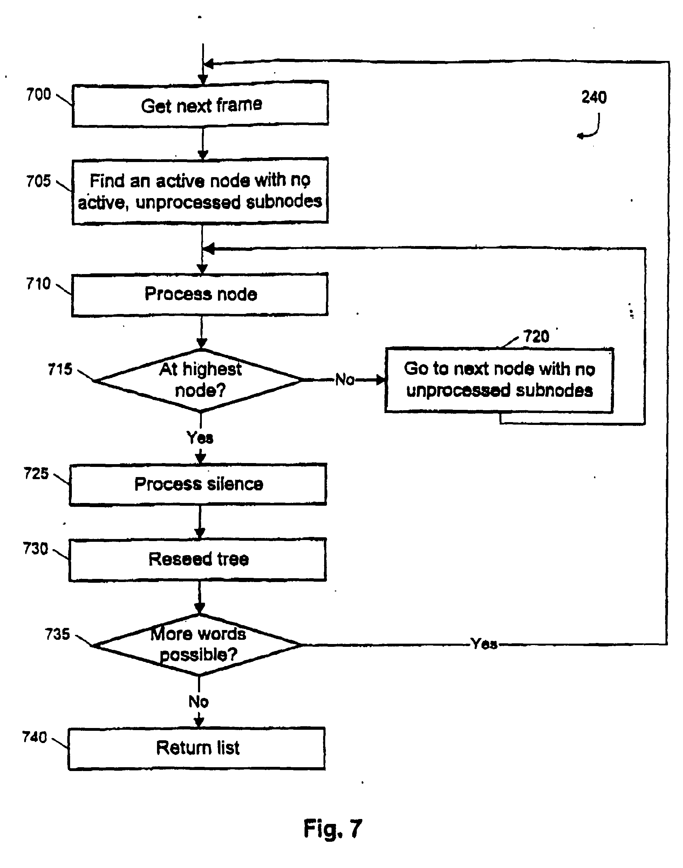

Operation of the pre-filtering procedure 240 is illustrated in Fig. 7. The pre-filtering procedure begins by retrieving the next frame of parameters for an utterance (step 700). Immediately after initialization, the next frame will be the first frame for the utterance. Thereafter, the next frame will be the frame following the last frame that was processed by the pre-filtering procedure when the pre-filtering procedure was last called. The pre-filtering procedure does not reinitialize the lexical tree between requests for list of words. Accordingly, the state of the lexical tree when a list of words is requested corresponds to the state of the lexical tree after a previous list of words was returned.

After retrieving a frame of data, the pre-filtering procedure finds an active node in the tree with no unprocessed active successors (step 705). Successors of a node also may be referred to as subnodes of the node. When the lexical tree is initialized, the silence node 512 is the only active node.

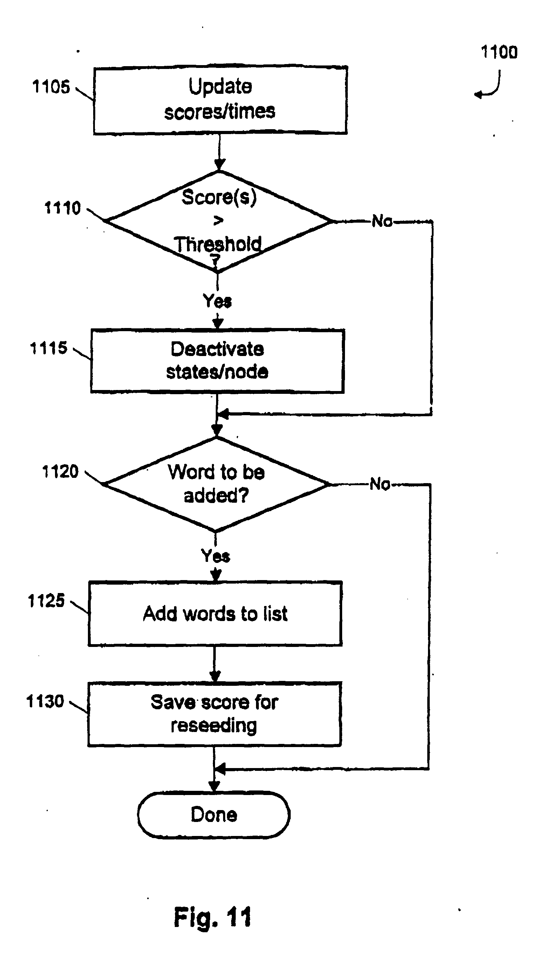

Next, the pre-filtering procedure processes the current node (step 710) according to a node-processing procedure 1100 that is discussed below with reference to Fig. 11. The node-processing procedure determines whether the node should spawn additional active nodes and whether the node should be rendered inactive. If the node is a leaf node, the node-processing procedure also determines whether the word corresponding to the node should be added to a word list for a time associated with the node.

After processing the node (step 710), the pre-filtering procedure determines whether the node is the highest node in the tree (that is, the root node) (step 715). If the node is not the highest node, then the pre-filtering procedure goes to the next node having no unprocessed active subnodes (step 720) and processes that node (step 710). When searching for the next node to process, the pre-filtering procedure considers inactive nodes having active subnodes or active siblings.

If the processed node is the highest active node (step 715), then the pre-filtering procedure processes the silence node 512 (step 725). In general, the silence node is processed by comparing a frame to a model for silence and adding the resulting score to the minimum of the current score for the silence node and the score for the root node 505.

Next, the pre-filtering procedure reseeds the lexical tree (step 730). The pre-filtering procedure reseeds the tree whenever the silence node 512 is active or a word was produced by a leaf node of the lexical tree, regardless of whether the word was added to the list of words. The pre-filtering procedure reseeds the tree by replacing the score for the root node 505 with the minimum of the score for the silence node 512 and the scores for any words produced by leaf nodes of the lexical tree for the current frame. If the silence node is inactive and no leaf node has produced a word, then the pre-filtering procedure replaces the score for the root node 505 with a bad score (that is, a score having a value larger than a pruning threshold).

Next, the pre-filtering procedure determines whether more words may be added to the word list for the requested time (step 735). If there are no active nodes in the lexical tree corresponding to speech that started at, before, or slightly after the start time for which the list was requested, and if the last frame to be processed corresponds to a time that is slightly after the start time for which the list was requested, then no more words may be added to the word list. A word produced by the lexical tree is added to the list of words corresponding to the start time of the word and to lists of words corresponding to times that precede and follow the start time of the word. It is for this reason that the pre-filtering procedure waits until there are no active nodes in the tree corresponding to speech that started slightly after the start time for the list of words. If more words may be added, then the pre-filtering procedure retrieves the next frame of parameters (step 700) and repeats the steps discussed above.

If words cannot be added to the word list (step 735), then the pre-filtering procedure returns the word list (step 740) to the recognizer 215. If the word list includes more than a predefined number of words, then the pre-filtering procedure removes words from the list prior to returning the list. The pre-filtering procedure removes the words that are least likely to correspond to the user's speech and removes enough words to reduce the number of words on the list to the predefined number. The procedure also deletes any lists of words for times prior to the requested start time.

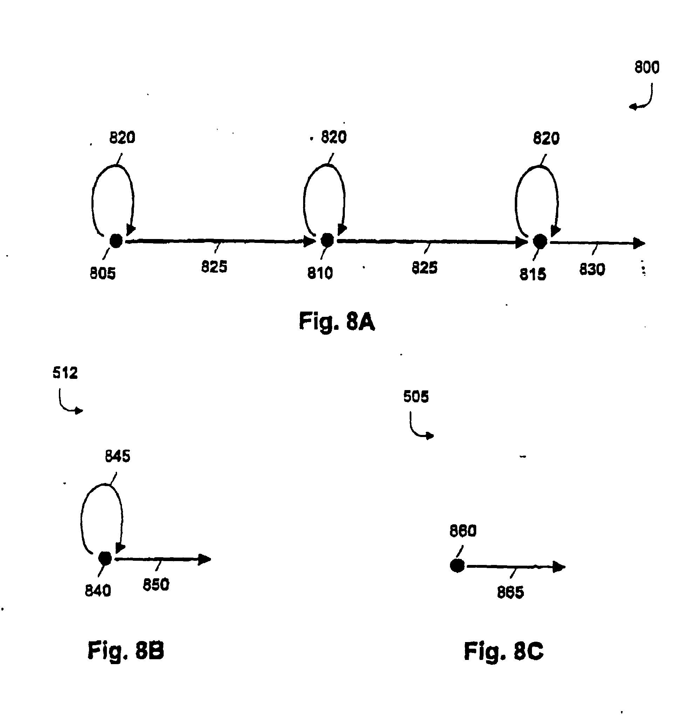

Each node of the lexical tree 500 (Fig. 5) represents a sequence of states for a particular phoneme. For example, Fig. 8A illustrates a node 800 that includes a first state 805, a second state 810, and a third state 815. A comparison with a frame of parameters may cause the score in a particular state to remain in the state (through a path 820). A score remains in the state when the score, after being adjusted based on a comparison with a model for the state, is better than a score passed from a preceding state or node, or when no score is passed from a preceding state or node. The comparison also may cause the score to be passed to a subsequent state through a path 825. A score is passed to a subsequent state when the score, after being adjusted based on a comparison with a model for the subsequent state, is better than the score in the subsequent state, or when no score is associated with the subsequent state. The score for the third state 815 may be passed to one or more subsequent nodes through a path 830.

Referring to Fig. 8B, the node 512 that corresponds to silence is represented by a single state 840. Each comparison with a frame of parameters may cause a score in the node to remain in the state 840 (through the path 845) and also may cause the score to be passed to the root node 505 through a path 850.

Referring to Fig. 8C, the root node 505 is represented by a single state 860. Comparison with a frame causes the score in the node to be passed to one or more subsequent nodes (including the silence node 512) through a path 865.

Each state of a node may be represented by four values: a score, a starting time, a leaving penalty, and a staying penalty. The score represents the likelihood that a series of frames has placed the lexical tree in the state (that is, the probability that the series of frames corresponds to the word or portion of a word to which the state corresponds). The scores are maintained as negative logarithmic values.

The starting time identifies the hypothesized time at which the user began to speak the word or words represented by the state. In particular, the starting time identifies the time at which the score associated with the state entered the lexical tree (that is, the time at which the score was passed from the state 840 along the path 850).

The leaving and staying penalties are fixed values associated with the state. The staying penalty is added to any score that stays in the state. The staying penalty is related inversely to the length of the sound represented by the state and to the length of the phoneme represented by the node to which the state belongs. For example, the staying penalty could be proportional to $-\log(1- 1/d_{avg})$, where $d_{avg}$ is the average duration, in frames, of the sound represented by the state. Thus, the staying penalty has a relatively large value when the sound corresponding to the state occurs for only a small amount of time and a relatively small value when the sound corresponding to the state occurs for a large amount of time.

The leaving penalty is added to any score that exits the state, and includes a duration component and a language model component. The duration component is related directly to the length of the sound represented by the state and to the length of the phoneme represented by the node to which the state belongs. For example, the duration component of the leaving penalty could be proportional to $-\log(1/d_{avg})$. Thus, the duration component of the leaving penalty has a relatively large value when the sound corresponding to the state occurs for a large amount of time and a relatively small value when the sound corresponding to the state occurs for a small amount of time.

The language model components of the leaving penalties for all states in a particular node together represent a language model score for the phoneme associated with that node. The language model score represents the likelihood that a word including the phoneme will occur in speech. The language model score included in the leaving penalties for a node is the increase in the best language model score for the branch of the lexical tree that begins with the node relative to the branch of the lexical tree that begins with the node's parent.

The following discussion assumes that there are no leaving or staying penalties associated with the state 840 or the state 860. The same result could be achieved by setting the leaving and staying penalties for states 840 and 860 equal to zero. The following discussion also assumes that the first frame is the first frame that may correspond to speech instead of silence.

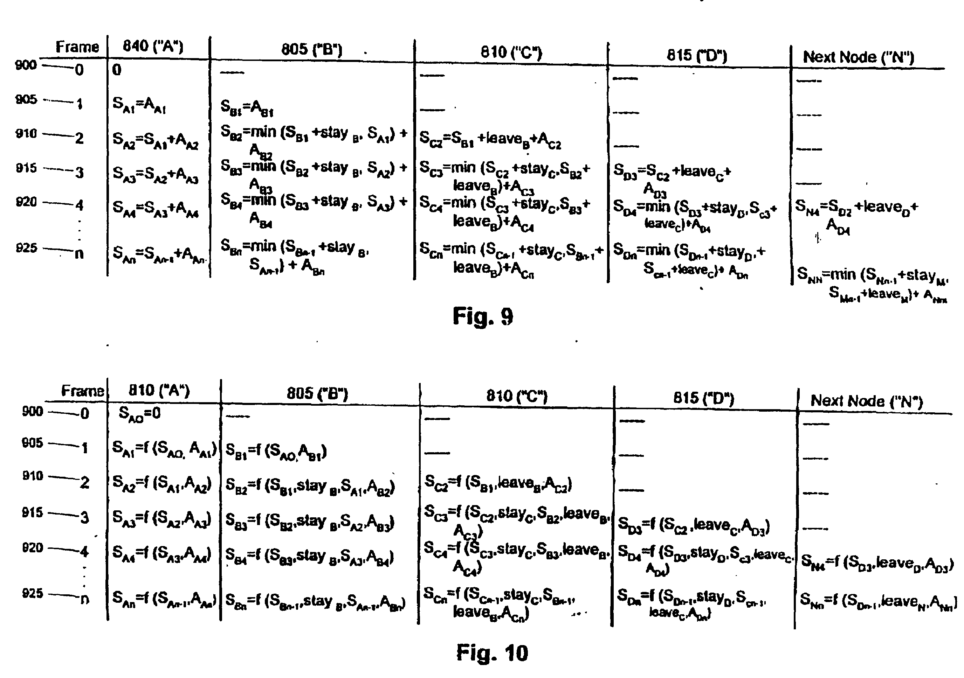

Fig. 9 provides a simplified example of how scores propagate through the lexical tree. Before the first frame is retrieved (row 900), state 840 (which corresponds to silence) has a score of 0 and no other nodes are active. The score of 0 means that there is a one hundred percent probability that the system is starting from silence.

After the first frame is retrieved (row 905), the score for the state 840 ($S_{A1}$) is set equal to the acoustic score ($A_{A1}$) resulting from an acoustic match of the first frame with an acoustic model corresponding to the state 840 (that is, the acoustic model for silence). Thus, the score for the state 840 ($S_{A1}$) is set equal to the likelihood that the first frame corresponds to silence.

Retrieval of the first frame also causes the state 805 to become an active state. Assuming that the node 800 corresponds to a phoneme that starts a word, the score for the state 805 ($S_{B1}$) is set equal to the acoustic score ($A_{B1}$) resulting from an acoustic match of the first frame with the acoustic model corresponding to the state 805. Thus, the score for the state 805 ($S_{B1}$) is set equal to the likelihood that the first frame corresponds to the state 805. The starting time for the state 805 is set equal the time associated with the first frame. This value for the starting time indicates that the score at state 805 represents a word that started at a time corresponding to the first frame. The starting time moves with the score as the score propagates through the lexical tree.

After the second frame is retrieved (row 910), the score for the state 840 ($S_{A2}$) is set equal to the sum of the previous score for the state ($S_{A1}$) and the acoustic score ($A_{A2}$) resulting from an acoustic match of the second frame with the acoustic model for silence:

$$S_{A2} = S_{A1} + A_{A2} = A_{A1} + A_{A2}.$$

As noted above, each of the scores corresponds to a negative logarithmic probability. Accordingly, adding scores together corresponds to multiplying the probabilities. Thus, the score for the state 840 ($S_{A2}$) equals the likelihood that both of the first and second frames correspond to silence. This process is repeated for subsequent frames (for example, lines 915 and 920) so that the score for the state 840 at a frame "n" ($S_{An}$) equals:

$$S_{An} = S_{An-1} + A_{An} = \sum_{n=1}^{n} A_{An}.$$

This expression assumes that the silence node 512 is not reseeded from the root node 505. If reseeding occurs at a frame n, then the value of $S_{An-1}$ would be replaced by the score in the root node 505 for the frame n-1.

After the second frame is retrieved, the score for the state 805 ($S_{B2}$) is set equal to:

$$S_{B2} = \min(S_{B1} + stay_B, S_{A1}) + A_{B2},$$

where $A_{B2}$ is the acoustic score resulting from an acoustic match of the second frame with the acoustic model corresponding to state 805 and $stay_B$ is the staying penalty for state 805. The score for state 805 ($S_{B2}$) corresponds to the more likely of two alternatives: (1) the first frame was silence and the second frame was the sound represented by the state 805 or (2) both of the first and second frames were the sound represented by the state 805. The first alternative corresponds to a transition from state 840 to state 805 along the path 850. The second alternative corresponds to a transition from state 805 back to state 805 along path 820. When the first alternative is the more likely, the starting time corresponding to the first frame that was stored previously for the state 805 is replaced by a value corresponding to the second frame. This value indicates that the score at state 805 represents a word that started with the second frame.

After the second frame is retrieved, the state 810 becomes an active state. The score for the state 810 ($S_{C2}$) is set equal to:

$$S_{C2} = S_{B1} + leave_B + A_{C2},$$

where $A_{C2}$ is the acoustic score resulting from an acoustic match of the second frame with the acoustic model corresponding to state 810 and $leave_B$ is the leaving penalty for the state 805. Similarly, $leave_C$ and $leave_D$ are leaving penalties for, respectively, states 810 and 815. The sum of language model components of $leave_B$, $leave_C$ and $leave_D$ represents the language model score for the phoneme represented by the node 800.

The methodology for determining state scores for states other than the silence state can be expressed more generally as:

$$S_{i,j} = \min\left(S_{i,j-1} + stay_i, S_{i-1,j-1} + leave_{j-1}\right) + A_{i,j},$$

for i greater than zero (where i equals zero corresponds to silence), and with the boundary condition that the score for an inactive state equals infinity or some sufficiently large value. The starting time for the state may be represented as:

$$t_{i,j} = t_{i,j-1} \ \ for \ S_{i,j-1} + stay_i \le S_{i-1,j-1} + leave_{j-1},$$

or

$$t_{i,j} = t_{i-1,j-1} \ \ for \ S_{i,j-1} + stay_i > S_{i-1,j-1} + leave_{j-1}$$

for i and j greater than zero and with the boundary condition that the time value for a newly active state represents the frame at which the state became active. As previously noted, state scores for the silence state may be determined as;

$$S_{0,j} = S_{0,j-1} + A_{0,j} = \sum_{m=1}^{j} A_{0,m}$$

with the boundary condition that $S_{0,0}$ equals zero. An even more general form, in which the scores are expressed as functions of the various parameters, is illustrated in Fig. 10.

Referring to Fig. 11, a node may be processed according to a node-processing procedure 1100. Initially, the node-processing procedure updates the scores and time values for each state of the node (step 1105). The node-processing procedure updates the scores and time values by generating acoustic scores and using the equations discussed above.

When the last state of the node was active prior to updating the scores for the node, the node-processing procedure uses the score for the last state to generate scores for any inactive subnodes of the node. If the generated score for a subnode does not exceed a pruning threshold, then the node-processing procedure activates that subnode and provides the subnode with the generated score.

Next, the node-processing procedure determines whether the score of any state of the node exceeds the pruning threshold (step 1110). When a score exceeds the pruning threshold, the likelihood that the word represented by the score was spoken is deemed to be too small to merit further consideration. For this reason, the procedure prunes the lexical tree by deactivating any state having a score that exceeds the pruning threshold (step 1115). If every state of the node is deactivated, then the node-processing procedure also deactivates the node. The node-processing procedure may deactivate a node or state by deleting a record associated with the node or state, or by indicating in the record that the node or state is inactive. Similarly, the node-processing procedure may activate a node or state by creating a record and associating the record with the node or state, or by indicating in an existing record that the node or state is active. The procedure may use a dynamic pruning threshold that accounts for variations in the average or best score in the lexical tree at any given time.

Next, the node-processing procedure determines whether a word is to be added to a list of words (step 1120). A word is added to the list of words when the node being processed corresponds to the last phoneme of a word, a score has been propagated out of the last state of the node, and the score is less than a list threshold. Before comparing the score to the list threshold, the node-processing procedure adds a language model score to the score. The language model score corresponds to the difference between the language model score for the word and the incremental language model score that is already included in the score. In general, the list threshold has a lower value than the pruning threshold. If the node being processed corresponds to the last phoneme of multiple words having the same phonetic spelling, then all of the words to which the node corresponds are added to the list of words.

If the noted conditions are met, the node-processing procedure adds the word or words to the list (step 1125). A word is stored in the list of words along with the score propagated out of the last state. If the word is on the list already, then the node-processing procedure stores with the list the better of the score already stored with the list or the score propagated out of the last state. The scores for words in a list of words are returned along with the list of words. The recognizer 215 uses these scores in making the detailed match.

The node-processing procedure also adds the word to lists of words for times that precede or follow the starting time to account for possible inaccuracies in the starting time of the word that may result from selecting the better of a score that remains in a state or a score propagated from a prior state. Spreading the word across multiple lists ensures that these inaccuracies will not impinge on the accuracy of the speech recognition system. The node-processing procedure spreads the word across multiple lists based on the length of the word.

After adding a word to the list of words (step 1125), the node-processing procedure saves the score associated with the word as a reseeding score for use in reseeding the tree (step 1130). Production of a word by the lexical tree means that the current frame may correspond to the last frame of the word (with the probability of such a correspondence being reflected by the score associated with the word). This means that the next frame may correspond to the beginning of a word or to silence resulting from a pause between words. The pre-filtering procedure reseeds the tree (step 730 of Fig. 7) to account for this possibility.

For a given frame, multiple nodes may produce words. However, the tree only needs to be reseeded once. To account for this, the node-processing procedure only saves the score associated with a word ($S_w$) as the reseeding score ($S_{RS}$) if the word is the first word to be generated by the tree for the current frame of if the word score is less than the score for all other words generated by previously-processed nodes for the current frame ($S_{RS'}$):

$$S_{RS} = \min\left(S_W, S_{RS}'\right).$$

Saving only the lowest score (that is, the score indicating the highest probability that the current frame was the last frame of a word) ensures that the tree will be reseeded using the highest probability that the next frame is the first frame of a new word.

To reseed the tree (step 730 of Fig. 7), the pre-filtering procedure activates the root node 505 and associates the minimum of the reseeding score ($S_{RS}$) and the score for the silence node 512 with the root node. During processing of the next frame, the active root node 505 may be used to activate nodes in the group 510 or to activate the silence node 512.

Processing of the node is complete after the node-processing procedure saves a score for use in reseeding the tree (step 1130), or if no word is to be added to the list of words (step 1120). The lexical tree pre-filtering procedure is discussed in detail in U.S. Patent No. 5,822,730, titled "LEXICAL TREE PRE-FILTERING IN SPEECH RECOGNITION" and issued October 13, 1998.

After the pre-filtering procedure responds with the requested list of words, the recognizer initiates a hypothesis for each word from the list and compares acoustic models for the word to the frames of parameters representing the utterance. The recognizer uses the results of these comparisons to generate scores for the hypotheses. Hypotheses having excessive scores are eliminated from further consideration. As noted above, hypotheses that comply with no active constraint grammar also are eliminated.

When the recognizer determines that a word of a hypothesis has ended, the recognizer requests from the pre-filtering procedure a list of words that may have been spoken just after the ending-time of the word. The recognizer then generates a new hypotheses for each word on the list, where each new hypothesis includes the words of the old hypothesis plus the corresponding new word from the list.

In generating the score for a hypothesis, the recognizer uses acoustic scores for words of the hypothesis, a language model score that indicates the likelihood that words of the hypothesis are used together, and scores provided for each word of the hypothesis by the pre-filtering procedure. The scores provided by the pre-filtering procedure include components corresponding to a crude acoustic comparison and a language model score indicative of the likelihood that a word is used, independently of context. The recognizer may eliminate any hypothesis that is associated with a constraint grammar (for example, a command hypothesis), but does not comply with the constraint grammar.

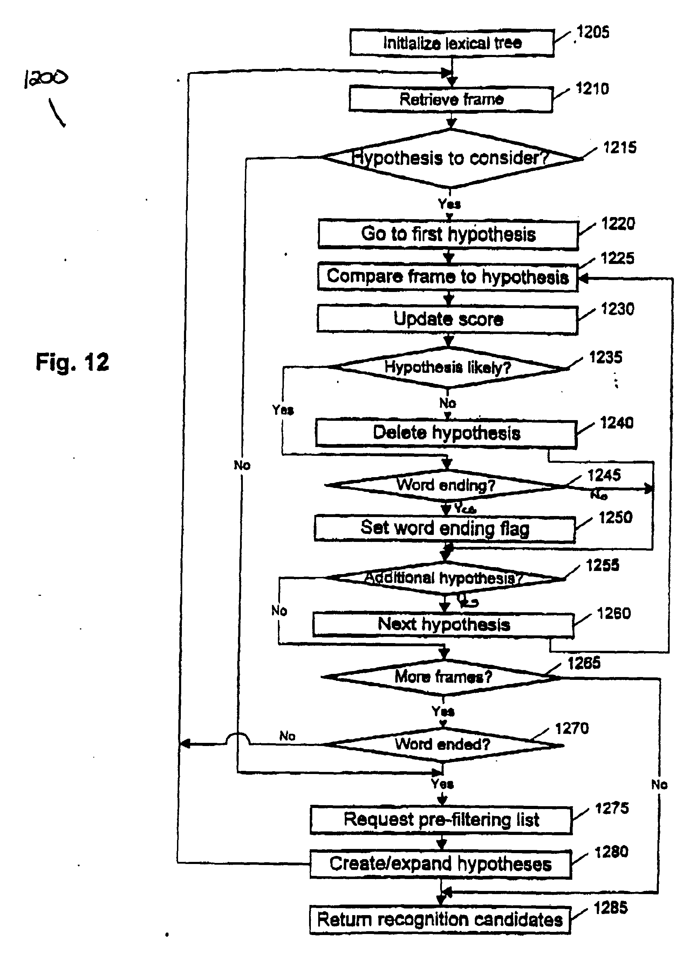

Referring to Fig. 12, the recognizer 215 operates according to a procedure 1200. First, prior to processing, the recognizer 215 initializes the lexical tree 500 as described above (step 1205). The recognizer 215 then retrieves a frame of parameters (step 1210) and determines whether there are hypotheses to be considered for the frame (step 1215). The first frame always corresponds to silence so that there are no hypotheses to be considered for the first frame.

If hypotheses need to be considered for the frame (step 1215), the recognizer 215 goes to the first hypothesis (step 1220). The recognizer then compares the frame to acoustic models 235 for the last word of the hypothesis (step 1225) and, based on the comparison, updates a score associated with the hypothesis (step 1230).

After updating the score (step 1230), the recognizer determines whether the user was likely to have spoken the word or words corresponding to the hypothesis (step 1235). The recognizer makes this determination by comparing the current score for the hypothesis to a threshold value. If the score exceeds the threshold value, then the recognizer 215 determines that the hypothesis is too unlikely to merit further consideration and deletes the hypothesis (step 1240).

If the recognizer determines that the word or words corresponding to the hypothesis were likely to have been spoken by the user, then the recognizer determines whether the last word of the hypothesis is ending (step 1245). The recognizer determines that a word is ending when the frame corresponds to the last component of the model for the word. If the recognizer determines that a word is ending (step 1245), the recognizer sets a flag that indicates that the next frame may correspond to the beginning of a word (step 1250).

If there are additional hypotheses to be considered for the frame (step 1255), then the recognizer selects the next hypothesis (step 1260) and repeats the comparison (step 1225) and other steps. If there are no more hypotheses to be considered for the frame (step 1255), then the recognizer determines whether there are more frames to be considered for the utterance (step 1265). The recognizer determines that there are more frames to be considered when two conditions are met. First, more frames must be available. Second, the best-scoring node for the current frame or for one or more of a predetermined number of immediately preceding frames must have been a node other than the silence node (that is, the utterance has ended when the silence node is the best-scoring node for the current frame and for a predetermined number of consecutive preceding frames).

If there are more frames to be considered (step 1265) and the flag indicating that a word has ended is set (step 1270), or if there were no hypotheses to be considered for the frame (step 1215), then the recognizer requests from the pre-filtering procedure 240 a list of words that may start with the next frame (step 1275).

Upon receiving the list of words from the pre-filtering procedure, the recognizer uses the list of words to create hypotheses or to expand any hypothesis for which a word has ended (step 1280). Each word in the list of words has an associated score. Prior to adding a list word to a hypothesis, the recognizer modifies the list score ($S_L$) for the word to produce a modified list score ($S_{ML}$) as:

$$S_{ML} = S_L + L_C - L_L,$$

where Lc is a language model score that represents the frequency with which the pair of words that includes the list word and the immediately preceding word in the hypothesis are used together in speech, and $L_L$ is a language model score included in the list score and corresponds to the frequency with which the list word is used in speech, without reference to context. The recognizer then adds the modified list score to the score for the hypothesis and compares the result to a threshold value. If the result is less than the threshold value, then the recognizer maintains the hypothesis. Otherwise, the recognizer determines that the hypothesis does not merit further consideration and abandons the hypothesis. As an additional part of creating or expanding the hypotheses, the recognizer compares the hypotheses to the active constraint grammars 225 and abandons any hypothesis that corresponds to no active constraint grammar. The recognizer then retrieves the next frame (step 1210) and repeats the procedure.

If there are no more speech frames to process, then the recognizer 215 provides the most likely hypotheses to the control/interface module 220 as recognition candidates (step 1285).

The control/interface module 220 controls operation of the speech recognition software and provides an interface to other software or to the user. The control/interface module receives the list of recognition candidates for each utterance from the recognizer. Recognition candidates may correspond to dictated text, speech recognition commands, or external commands. When the best-scoring recognition candidate corresponds to dictated text, the control/interface module provides the text to an active application, such as a word processor. The control/interface module also may display the best-scoring recognition candidate to the user through a graphical user interface. When the best-scoring recognition candidate is a command, the control/interface module 220 implements the command. For example, the control/interface module may control operation of the speech recognition software in response to speech recognition commands (for example, "wake up", "make that"), and may forward external commands to the appropriate software.

The control/interface module also controls the active vocabulary, acoustic models, and constraint grammars that are used by the recognizer. For example, when the speech recognition software is being used in conjunction with a particular application (for example, Microsoft Word), the control/interface module updates the active vocabulary to include command words associated with that application and activates constraint grammars associated with the application.

Other functions provided by the control/interface module 220 include an enrollment program, a vocabulary customizer, and a vocabulary manager. The enrollment program collects acoustic information from a user and trains or adapts a user's models based on that information. The vocabulary customizer optimizes the language model of a specific topic by scanning user supplied text. The vocabulary manager is a developer tool that is used to browse and manipulate vocabularies, grammars and macros. Each function of the control/interface module 220 may be implemented as an executable program that is separate from the main speech recognition software.

The enrollment program may operate in an interactive mode that guides the user through the enrollment process, or in a non-interactive mode that permits the user to enroll independently of the computer. In the interactive mode, the enrollment program displays the enrollment text to the user and the user reads the displayed text. As the user reads, the recognizer 215 uses the enrollment grammar to match a sequence of utterances by the user to sequential portions of the enrollment text. When the recognizer 215 is unsuccessful, the enrollment program prompts the user to repeat certain passages of the text. The recognizer uses acoustic information from the user's utterances to train or adapt acoustic models 235 corresponding to the matched portions of the enrollment text. The interactive enrollment program is discussed in U.S. Application No. 08/825,536, titled "ENROLLMENT IN SPEECH RECOGNITION" and filed March 28, 1997.

The control/interface module 220 also implements error correction and cursor/position manipulation procedures of the software 124. Error correction procedures include a "make that" command and a "spell that" command. Cursor/ position manipulation procedures include the "select" command discussed above and variations thereof (for example, "select [start] through [end]"), "insert before/after" commands, and a "resume with" command. The various correction procedures are described in U.S. Patent No. 5,794,189, issued August 11, 1998 and U.S. Patent No. 6,064,959, issued May 16, 2000.

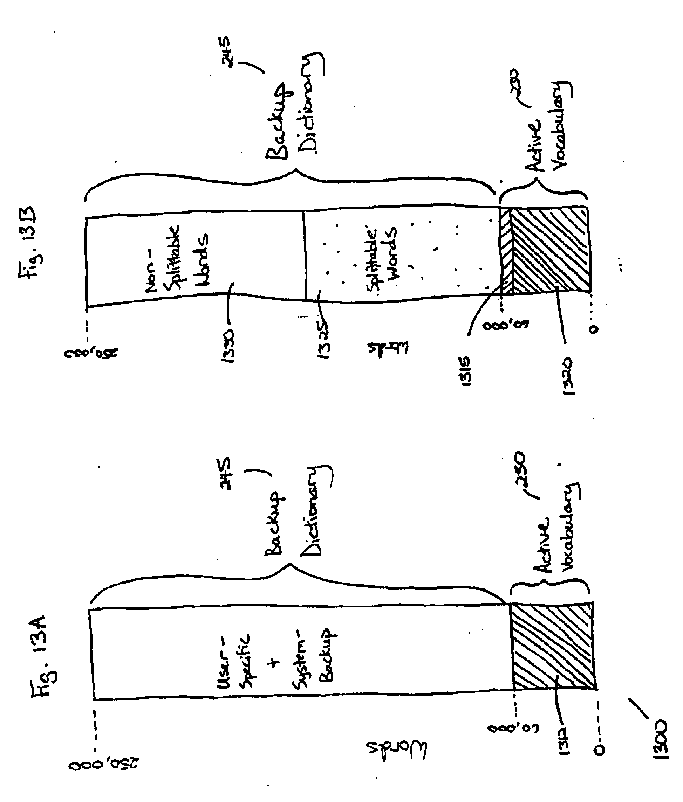

Referring also to Fig. 13A, a complete dictation vocabulary 1300 includes the active vocabulary 230 plus a backup dictionary 245. The backup dictionary 245 may include user-specific backup vocabulary words and system-wide backup vocabulary words. User-specific backup vocabulary words include words that a user has added while using the speech recognition software. In one implementation, there is a limit of 64,000 user-specific words. User-specific words are stored in vocabulary files for the user and for the dictation topic used during their addition, and are available as part of the backup dictionary for the dictation topic regardless of the user, and to the user regardless of the dictation topic. For example, if a user using a medical topic adds the word "ganglion" to the dictation vocabulary 1300, any other user of the medical topic will have immediate access to the word "ganglion". In addition, the word will be written into the user-specific backup vocabulary, so that, if the user later says "ganglion" while using a legal topic, the word "ganglion'' will be available. The system-wide backup vocabulary words include all other non-active words known to the system.

The control/interface module 220 implements error correction procedures of the speech recognition software 124. When the speech recognition system 100 makes a recognition error, the user may invoke an appropriate correction command to remedy the error. During error correction, word searches of the backup dictionary 245 start with the user-specific backup dictionary and then check the system-wide backup dictionary. The backup dictionary 245 also is searched when there are new words in text that a user has typed.

In general, the backup dictionary 245 includes substantially more words than are included in the active vocabulary 230. For example, when the active vocabulary 230 has 60,000 or so entries, the backup dictionary 245 may have roughly 190,000 entries. The active vocabulary 230 is a dynamic vocabulary in that entries may be added or subtracted from the active vocabulary over time. For example, when the user indicates that an error has been made and the control/ interface module 220 uses the backup dictionary 245 to correct the error, a new word from the backup dictionary 245 may be added to the active vocabulary 230 to reduce the likelihood that the error will be repeated.

Referring also to Fig. 13B, the effective size of the active vocabulary 230 may be increased by dividing words into constituent components or word fragments 1315. Word fragments include prefixes and suffixes, which are collectively known as affixes. A prefix is any word fragment that precedes another word fragment or word and therefore may be represented as "prefix+", For example, a common prefix used in the English language is "re+". In contrast to a prefix, a suffix is any word fragment that follows another word fragment or word. A suffix may be represented as ''+suffix". For example, a common suffix used in the English language is "+ed".

Word fragments also include roots that can join with a prefix or a suffix. A root may be a true root, in which case it is not a complete word when used alone and therefore may be represented as "+root+". An example of a true root is "+crimin+" which may form the word "decriminalize" when preceded by prefix "de+" and followed by the suffixes, in succession, "+al" and "+ize". A root also may be a word root that is a word when used alone. For example, the word root "look" may be used as the word "look" or may be joined with other word fragments to form another word such as "looked".

Word fragments may also include separators, such as the "s" used in the German language to join words together or the hyphen, which is frequently used in the English language, and infixes, which are word fragments positioned in the interior of a word in such languages as Hungarian Mon-Khmer. For example, in the language Tagalog "tawa" means "laugh," but "t -um- awa" means "to laugh". Thus, -um- could represent an infix in the Tagalog language. As another example, in the Thai language, "pak" means "rest", however "p -n- ak" means "a support" such as a chair. Thus, -n- could represent an infix in the Thai language. Infixes are rare in the English language. An example of an informal infix used in English might be -bloody- as in "fan -bloody- tastic".

Each word fragment 1315 may be included as a separate entry in the active vocabulary 230 along with a set of active words 1320 that typically includes a large portion of the previously active words 1312. The word fragments 1315 increase the effective size of the active vocabulary to include words that may be in the backup dictionary 245, designated as splittable words 1325, that may be formed from combinations of word fragments with other word fragments or with active words. The words of the backup dictionary that may not be formed from these combinations are designated as non-splittable words 1330.

When the recognizer 215 detects a word fragment 1315 in an utterance, the system combines the word fragment with one or more other word fragments or words to produce a new word, and then searches the backup dictionary 245 or applies rules to confirm that the new word is a valid word. Thus, the speech recognition system 100 is able to tap into the backup dictionary 245 without requiring the recognizer to process words of the backup dictionary 245. By increasing the effective size of the active vocabulary 230, without increasing its real size, the recognition coverage of the speech recognition system 100 is expanded without significantly increasing the required memory capacity or processing time.

The backup dictionary 245 may include words that are not recognized as a concatenation of a sequence that includes words and word fragments. For example, many proper names may be included in the backup dictionary. The name "Scarlotti" is one example of a proper name that may not be splittable.

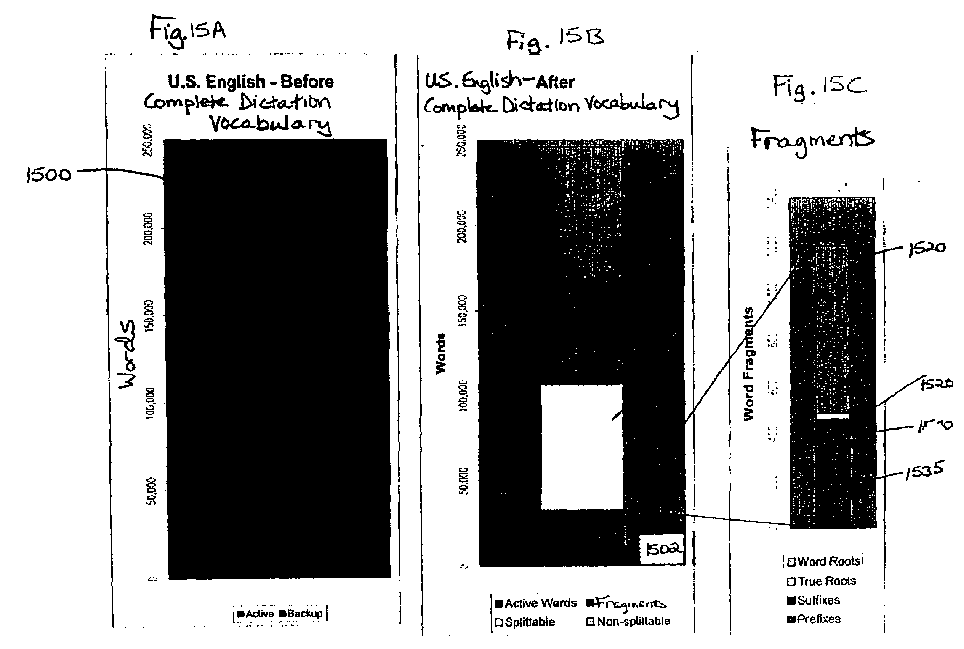

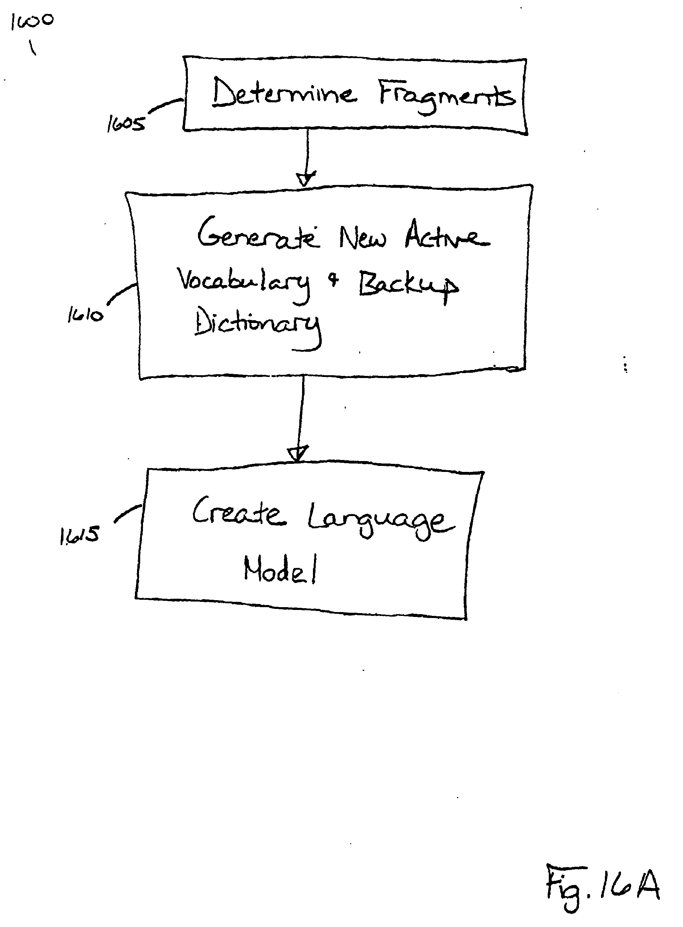

Figs. 14A and 15A show examples of the size of the complete dictation vocabulary 1300 of one implementation for, respectively, the French language and the U.S. version of the English language, without the use of word fragments. In this implementation, the complete French dictation vocabulary 1400 includes about 180,000 words with about 40,000 of those words being in the French active vocabulary 230, By contrast, in this implementation, the complete U.S. English dictation vocabulary 1500 includes about 240,000 words with about 30,000 of those words being in the U.S. English active vocabulary 230.

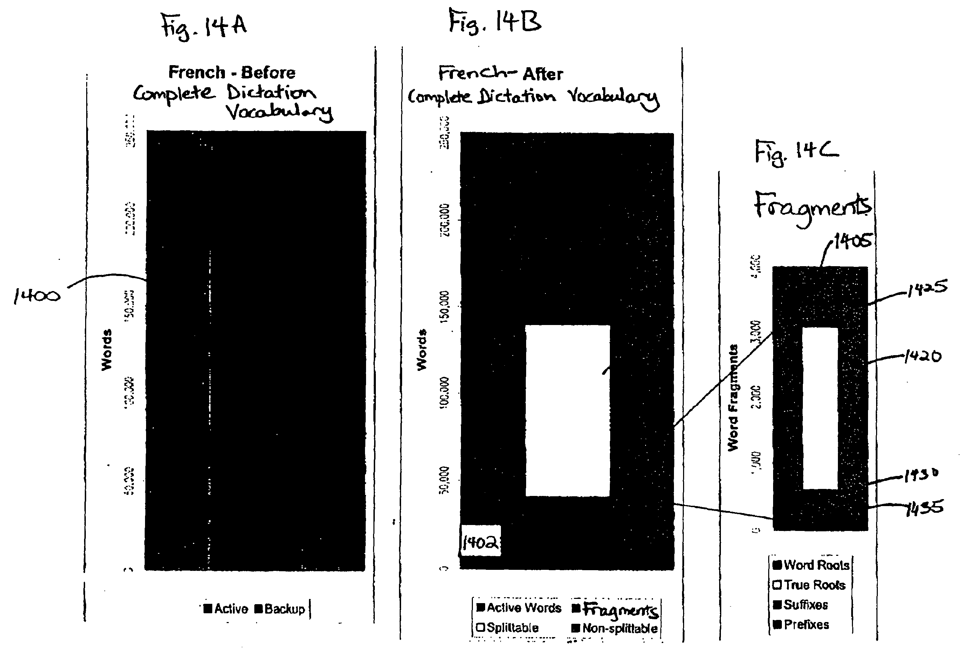

Referring to Fig. 14B, word fragments may be used to increase the effective size of the French active vocabulary 230, while keeping the complete dictation vocabulary 1400 near about 180,000 words and the active vocabulary 230 near 40,000 elements. With word fragments, the active vocabulary 230 includes about 36,700 active French words 1402 and about 3,300 French word fragments 1405, such that the word fragments 1405 total about 8% of the total active vocabulary 230. As shown, in this implementation, a substantial portion of the backup dictionary constitutes splittable words 1410 that may be accessed from the active vocabulary 230, while a much smaller portion constitutes non-splittable words 1415. Referring also to Fig. 14C, the French word fragments 1405 include mostly French true roots 1420 (that is, roots that are not words), while French word roots 1425 (that is, roots that are also words), French suffixes 1430, and French prefixes 1435 constitute a small segment of the French word fragments 1405.

Referring to Fig 15B, word fragments also may be used to increase the effective size of the U.S. English active vocabulary 230, while keeping the complete dictation vocabulary 1500 near about 240,000 words and the active vocabulary 230 at 30,000 elements. The active vocabulary 230 includes about 28,800 active U.S. English words 1502 and about 1,200 U.S. English word fragments 1505, such that the word fragments 1505 total about 4% of the total active vocabulary 230. As shown, a smaller portion of the backup dictionary constitutes splittable words 1510 that may be accessed from the active vocabulary 230, while a larger portion constitutes non-splittable words 1515. Referring also to Fig. 15C, the set of U.S. English word fragments 1505, in contrast to the French word fragments 1405, includes quite a small percentage of U.S. English true roots 1520 in this particular implementation, while U.S. word roots 1525 constitute the largest segment of U.S. word fragments 1505. In this implementation, U.S. English suffixes 1530 and prefixes 1535 constitute about one third of the U.S. English word fragments 1505, a substantially larger portion than the true roots. In another more recent implementation, the set of U.S. English word fragments 1505 may be larger or may include a larger percentage of true roots.

An effective size of the active vocabulary may be increased by creating an using fragmented word models. Memory and processing speed requirements tend to increase with the number of entries in the active vocabulary. As such, the size of the active vocabulary that may be processed in an allotted time by a particular processor using an available amount of memory is limited. Since the recognizer does not recognize words that are not included in the active vocabulary, the ability of the recognizer to recognize less-frequently-used words may be improved by increasing the size of the active vocabulary.

The effective size of the active vocabulary may by increased by dividing words into constituent components or fragments (for example, prefixes, suffixes, separators, infixes, and roots) and including each component as a separate entry in the active vocabulary. Thus, for example, a list of words and their plural forms (for example, "book, books, cook, cooks, hook, hooks, look, and looks") may be represented in the active vocabulary using the words (for example, "book, cook, hook, and look") and an entry representing the suffix that makes the words plural (for example, "+s", where the "+" preceding the "s" indicates that "+s" is a suffix). For a large list of words, and ignoring the entry associated with the suffix, this technique may considerably reduce the number of vocabulary entries needed to represent the list of words.

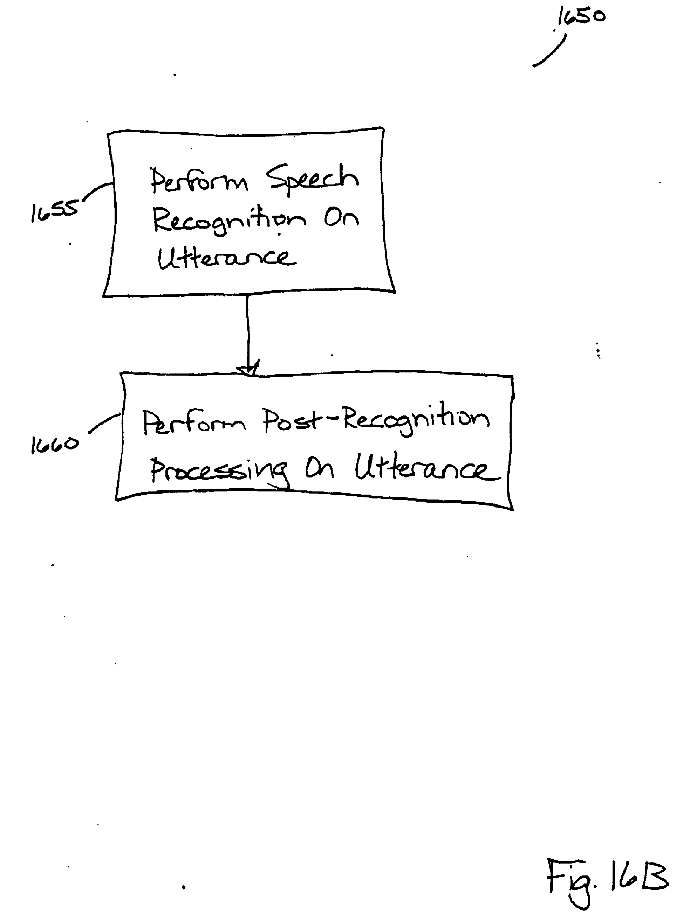

Referring to Fig. 16A, word fragments may be generated in the speech recognition system 100 through a procedure 1600. This procedure 1600 is implemented "offline"; that is before the speech recognition software 160 is sold and installed. The procedure is performed by a system other than the speech recognition system 100.

During the off-line procedure 1600, word fragments 1315 are identified (step 1605). Then, using the word fragments 1315, a new active vocabulary 230 and a new backup dictionary 245 are generated (step 1610).

In one implementation, the new active vocabulary is constrained to be the same size as the old active vocabulary, such that the word fragments 1315 replace the least frequently used words of the active vocabulary. For example, in the implementation shown in Fig. 14B, the new French active vocabulary 230 has the same total number of elements (that is, 40,000) as the old French active vocabulary shown in Fig. 14A, but now includes word fragments 1405 and a corresponding reduction in the number of active words.

In other implementations, the new active vocabulary may be larger or smaller in size than the old active vocabulary.

After the new backup dictionary and the new active vocabulary are built, the language model is created (step 1615). This permits the speech recognition system 100 to use the created language model to recognize both word fragments and words, and, in particular, to recognize word fragments in the context of surrounding word fragments and words.

Referring also to Fig. 16B, once the off-line procedure 1600 is completed, the speech recognition system 100 is ready to perform speech recognition using the updated language model and the new active vocabulary according to an "on-line" procedure 1650. To this end, the system 100 performs speech recognition on an utterance to generate a list of candidates (step 1655). During speech recognition, the recognizer 215 operates according to the procedure 1200 shown in Fig. 12, with the exception that the recognizer 21 5 is able to detect word fragments 1315 as well as words.

After the recognizer 215 generates the list of candidates for an utterance, the system 100 performs a post-recognition procedure (step 1660). During the post-recognition procedure, the system 100 combines any word fragments 1315 that may be included in a recognition candidate to form a word and looks up the word in the backup dictionary 245 or applies rules to verify that it is a valid word. Candidates that include word fragments that form invalid words are discarded.

The speech recognition system 100 performs speech recognition using the updated language model and the new active vocabulary (step 1655). During speech recognition, word fragments are treated like normal words, and the speech recognizer 215 operates according to the procedure 1200 illustrated in Fig. 12. As noted above, when the recognizer 215 determines that there are no more speech frames to process, it provides the most likely hypotheses for the utterance to the control/interface module 220 as a list of recognition candidates (step 1285). A particular recognition candidate may include word fragments in addition to words from the active vocabulary.

Once the speech recognizer 215 outputs the list of recognition candidates, the speech recognition system 100 performs the post-recognition procedure 1660 that substitutes words from the backup dictionary or accepted by some set of rules for word fragments in a recognition candidate and rescores the recognition candidate in view of the substitution. Rescored candidates are placed on a revised candidate list. Candidates that do not include word fragments are transferred directly to the revised candidate list. Thus, the revised list may include both recognition candidates from the original list and rescored recognition candidates.

Implementation of procedures 1600 and 1650 for generating and using word fragments, respectively, is described in U.S. Application No. 09/390,370, titled "EXPANDING AN EFFECTIVE VOCABULARY OF A SPEECH RECOGNITION SYSTEM" and filed September 7, 1999.

<u>HOMOPHONE SELECTION</u>

Homophones are words that sound the same but differ in spelling or representation, origin, and meaning. In the French language, for example, many words are homophones. In particular, French words include suffix word fragments that indicate the gender, number, person, and/or tense of the word. Often, the speech recognition systems described above fail to correctly distinguish homophones such as are used in the French language.

A word is a pure homophone of another word if the words are pronounced exactly the same. For example, the word "manger" is pronounced exactly like its pure homophones "mangé" and "mangés".

A word is a near homophone of another word if some of the phonemes in the words sound very close. For example, the word "manger" sounds similar to its near homophone "mangeait". As another example, the word "jouait" sounds similar to its near homophone "joué".

A set of n words is an n-to-m homophone of a set of m words if the sets are pronounced the same. For example, the two words "un patient" (n-2) sound exactly like their 2-to-1 homophone "impatient" (m=1).

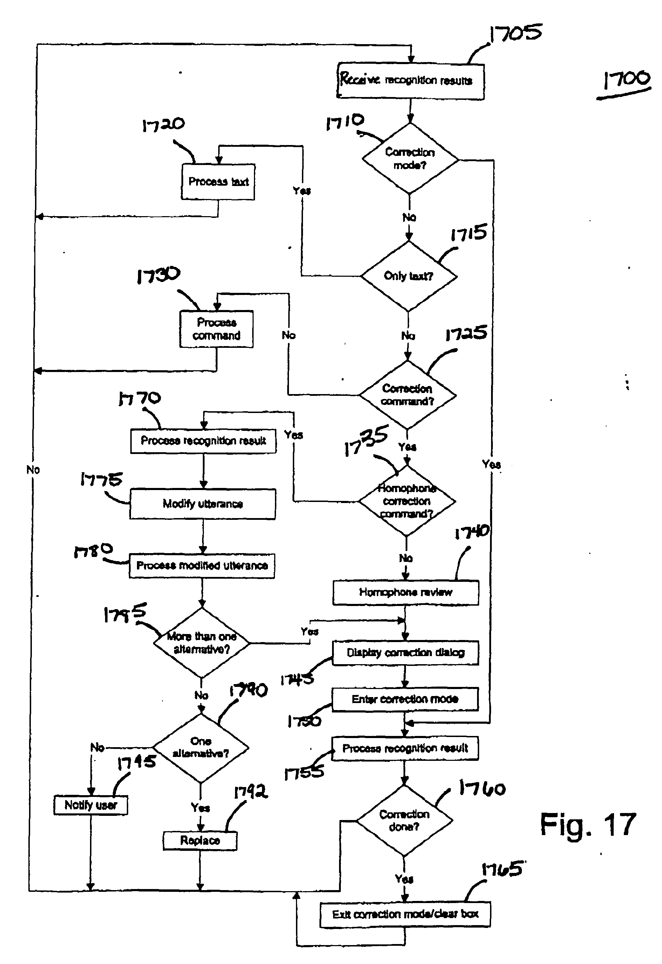

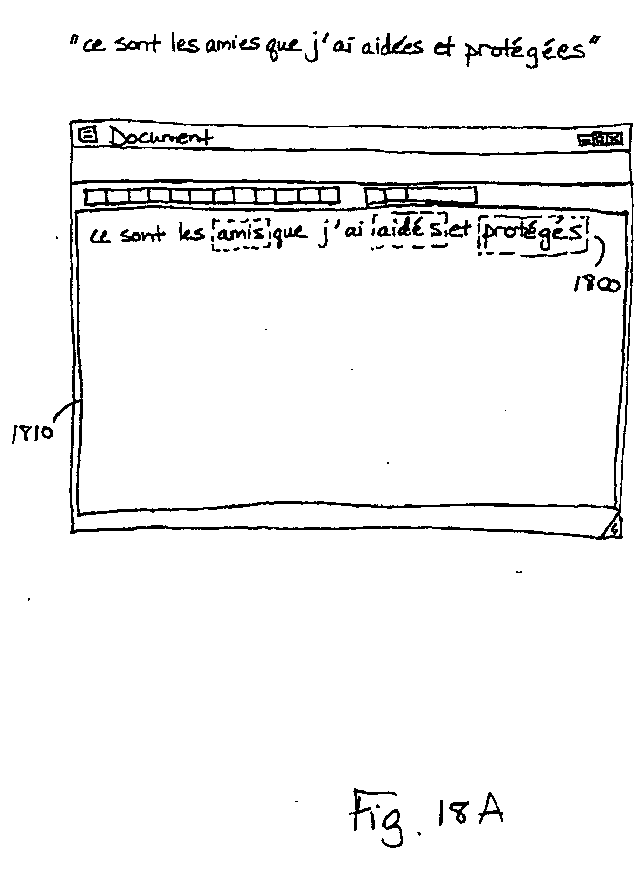

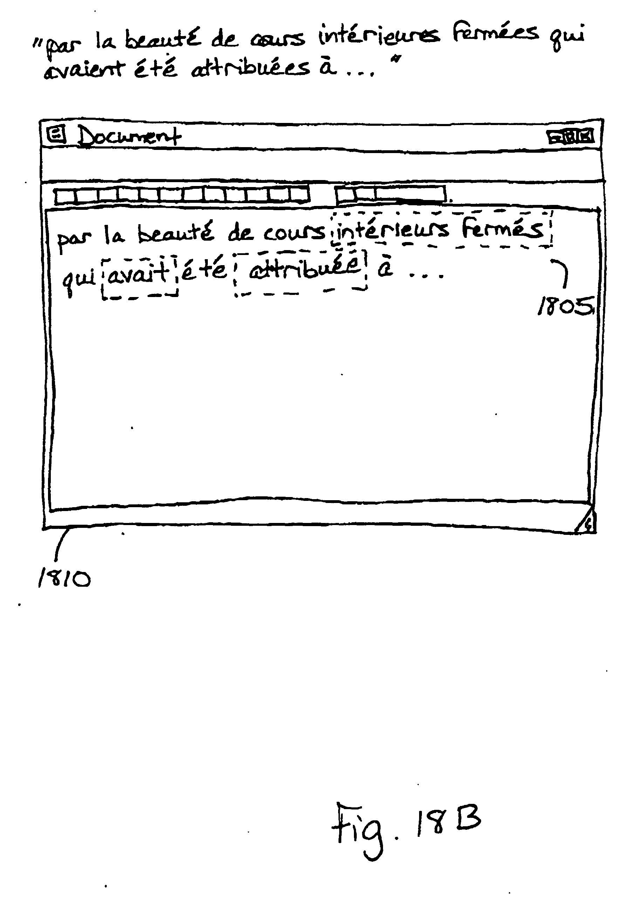

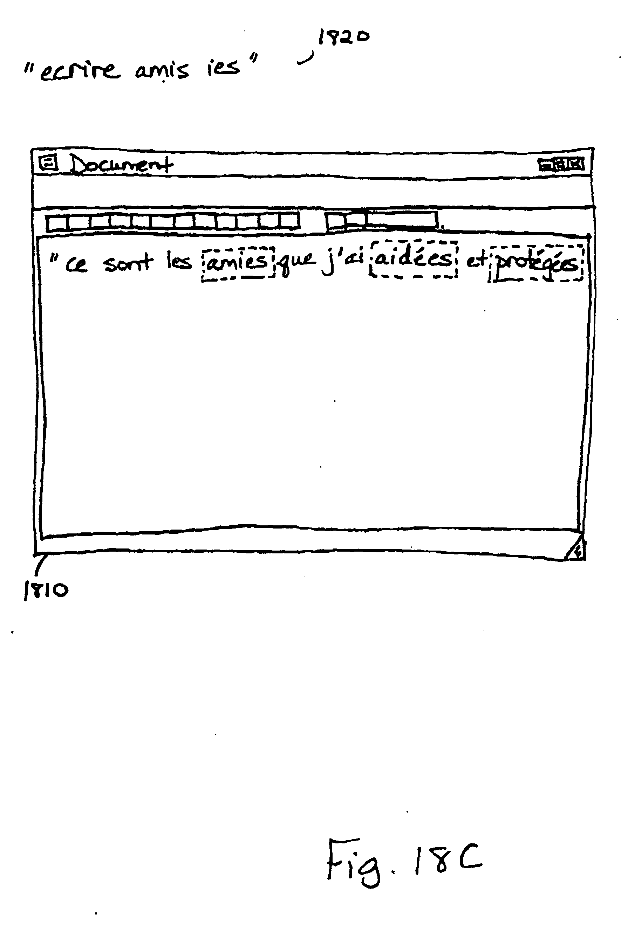

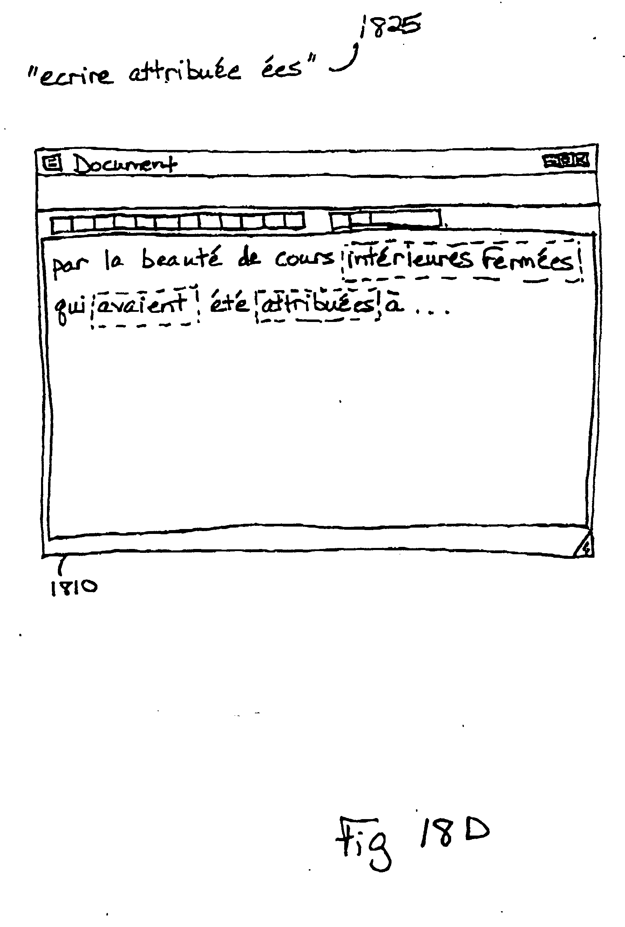

Referring to Fig. 17, the speech recognition system may process recognition results according to a procedure 1700. Initially, the speech recognition system receives recognition results for an utterance (step 1705). While the recognition results may include multiple recognition candidates, the system processes only the best-scoring recognition candidate in implementing the procedure 1700. For ease of discussion, this candidate is referred to as the top recognition candidate. If the speech recognition system is not operating in correction mode (that is, the correction dialog box is not displayed) (step 1710), the speech recognition system determines whether the top recognition candidate includes only text (step 1715). If so, the speech recognition system processes the text (step 1720). For example, the speech recognition system may insert the text 1800, 1805 into a dictation window 1810, as shown in Figs. 18A and 18B.

If the top recognition candidate includes something other than text (step 1715), the speech recognition system determines whether the candidate includes a correction command, such as the "make that" or "spell that" commands discussed above (step 1725). If the top recognition candidate does not include a correction command (step 1725), the speech recognition system processes any other command included in the top recognition candidate (step 1730). For example, if the top recognition candidate includes text and a formatting command such as New-Paragraph, then the speech recognition system processes the text portion of the candidate and performs the formatting command.

If the top recognition candidate includes a correction command (step 1725), the speech recognition system determines whether the candidate includes a homophone correction command that permits active correction of homophone mistakes (step 1735). The homophone correction command may be implemented as, for example, "Write <word> <ending>" in English or "Ecrire <word> <ending>" in French. In this command, the <word> is a word in the visible text and the <ending> is a finite set of possible endings (for example, about 300 possible endings). In one implementatin, the user spells out the ending. In other implementations, the user may type or pronounce the ending.

If the candidate does not include a homophone correction command (step 1735), then the speech recognition system performs a review of the best-scoring recognition candidates (step 1740) before displaying a correction dialog box (step 1745) and entering correction mode (step 1750).

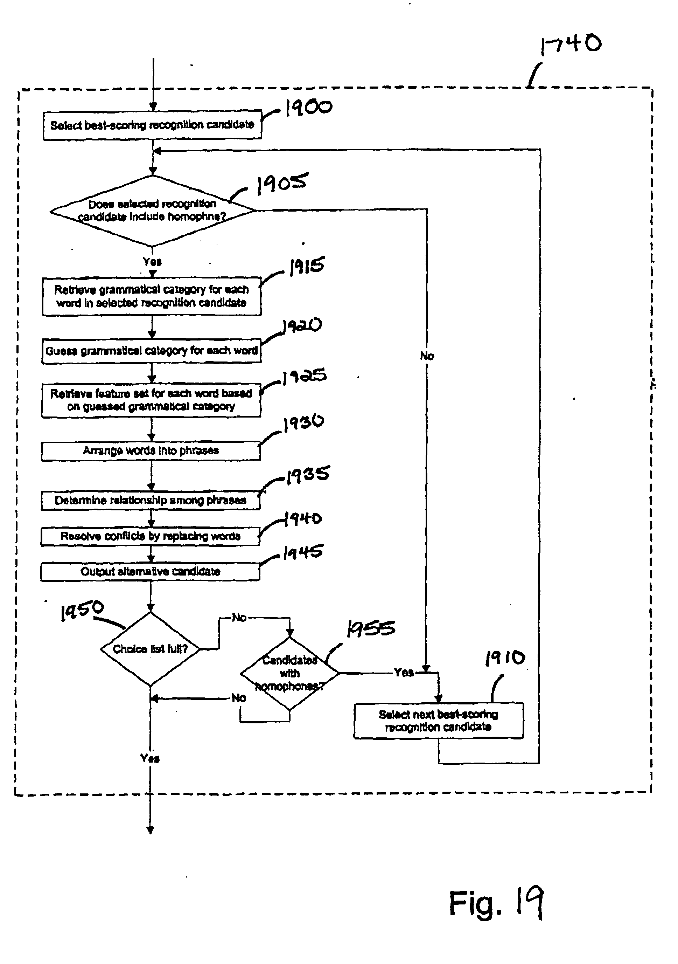

Referring also to Fig. 19, the speech recognition system performs a procedure 1740 for reviewing the best-scoring recognition candidates. Initially, the speech recognition system selects the best-scoring recognition candidate (step 1900) and determines whether the best-scoring recognition candidate includes any homophones (step 1905). If the best-scoring recognition candidate does not include one or more homophones (step 1905), then the speech recognition system selects the next best-scoring recognition candidate (step 1910) to determine if the that best-scoring recognition candidate includes one or more homophones (step 1905).

If the best-scoring recognition candidate includes one or more homophones, then for each word in the selected recognition candidate, the speech recognition system retrieves all possible grammatical categories (that is, parts of speech) using a tag set associated with the word (step 1915). A tag set (written as $\{P_1\ P_2\ ...\ P_n\}$) for a word includes tags corresponding to $P_i$, grammatical categories of the word. Grammatical categories include, for example, parts of speech such as nouns, prepositions, adjectives, verbs, pronouns, and features of words, where features include, for example, person, gender, number, and tense. For example, in a particular tag set, $P_3$ may include information about person (for example, second person) and $P_8$ may include information about tense (for example, past tense).

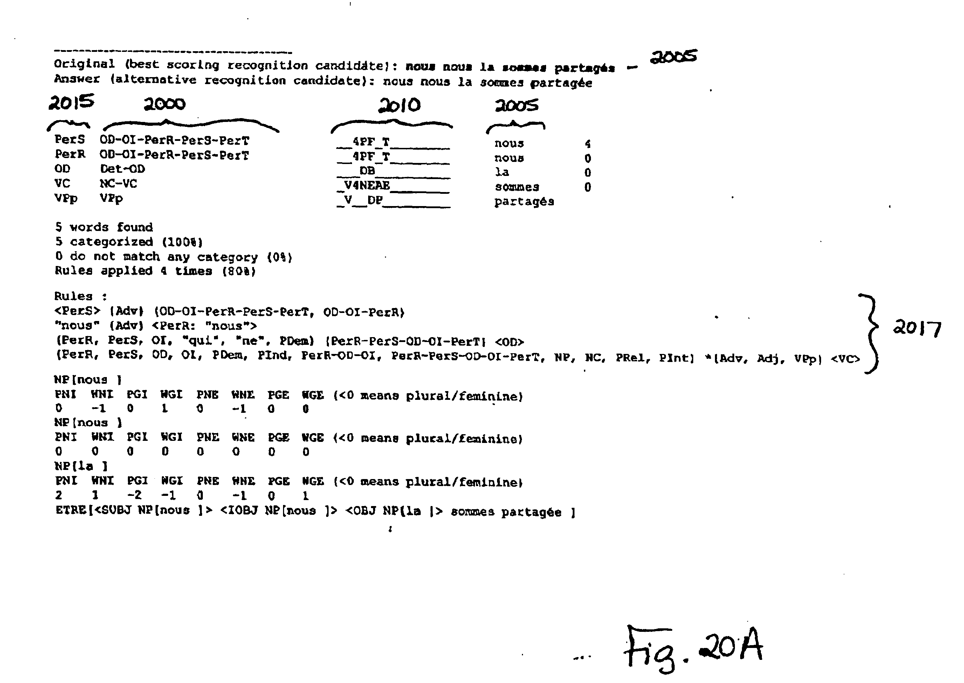

Referring also to Figs. 20A and 20B, in one example, the speech recognition system retrieves all possible grammatical categories 2000 for a selected recognition candidate "nous nous la sommes partagés" 2005 using tags 2010. In this example, the tag for the word "nous" is {_4PF_T_ } and the tag for the word "sommes" is {_V4NEAE_}. The possible grammatical categories 2000 for the word "nous" are OD (direct object pronoun), OI (indirect object pronoun), PerR (personal reflexive pronoun), PerS (personal subject pronoun), and PerT (personal pronoun), and the possible grammatical categories 2000 for the word "sommes" are NV (noun) and VC (conjugated verb).

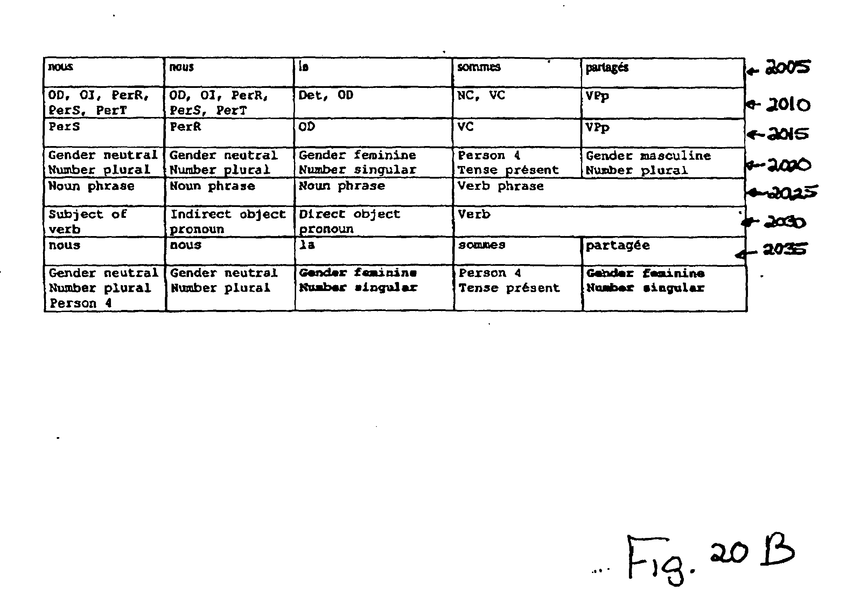

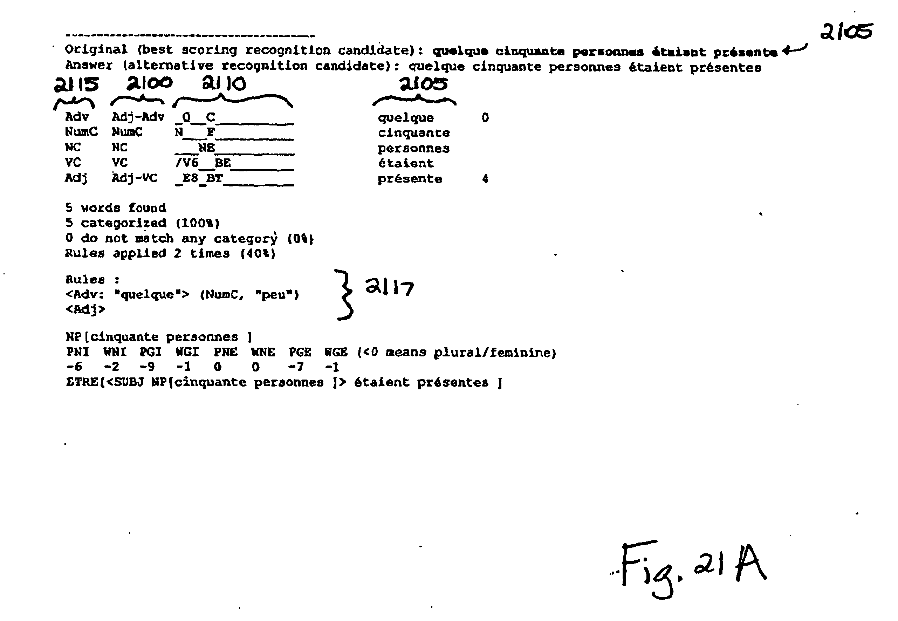

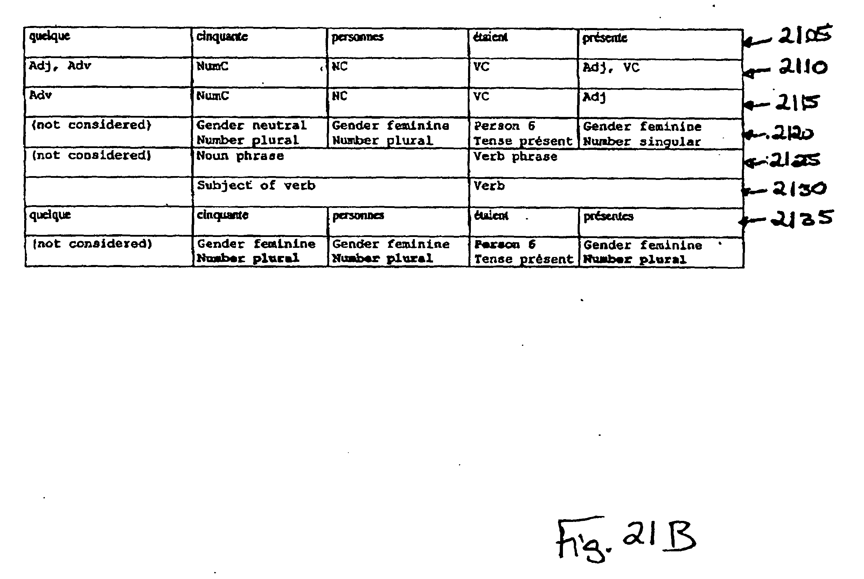

Referring also to Figs. 21A and 21B, in another example, the speech recognition system retrieves all possible grammatical categories 2100 for a selected recognition candidate "quelque cinquante personnes étaient présente" 2105 using tags 2110. In this example, the tag for the word "présente" is (_E8_BT_____) and the tag for the word "étaient" is {/V6_BE____}. The only possible grammatical category for the word "cinquante" is NumC (number) and the possible grammatical categories for the word "quelque" are Adv (adverb) and Adj (adjective).

Referring again to Fig. 19, after all possible grammatical categories for each word in the selected recognition candidate are retrieved (step 1915), the speech recognition system guesses a grammatical category for each word in the selected recognition candidate (1920). The speech recognition system uses rules to designate a grammatical category for a word in the selected recognition candidate (this may be referred to as resolving grammatical conflicts). These rules include local syntactic or contextual information, as discussed below.

For example, the word "le" in the selected recognition candidate "le bel enfants jouait," may be an object pronoun or a determinant. In the context of the selected recognition, candidate, the speech recognition system uses the rule that a determinant precedes an adjective (that is, "bel") and guesses that the word "le" is a determinant.

As shown in Figs. 20A and 20B, the grammatical categories 2015 for each word in the selected recognition candidate are guessed using the rules 2017, Likewise, in Figs. 21A and 21B, the grammatical categories 2115 for each word in the selected recognition candidate are guessed using the rules 2117. For example, one rule may be: a word that normally would be an adjective and that precedes a number must be an adverb. This rule is written in Fig. 21A as "<Adv: "quelque"> (NumC, "peu")". Thus, because the word "quelque" in the selected recognition candidate 2105 precedes the word Neinquantew which is a number, the word "quelque" must be an adverb. As another example, the rule written in Fig. 20A as "nous" {Adv} <PerR: "nous"> indicates that if the word "nous" precedes the word "nous," then the second instance of "nous" is grammatically a personal reflexive pronoun.

Based on the guessed grammatical category for each word in the selected recognition candidate, the speech recognition system retrieves a feature set for each word in the selected recognition candidate (step 1925). The feature set for a word is the set of all relevant features, such as person, gender, number, and tense, for that word and may be considered a subset of the tag set. As shown in Figs. 20B and 21B, the feature sets 2020 and 2120, respectively, are retrieved for each of the words in the selected recognition candidates 2005 and 2105, respectively. The feature set for the word "sommes" is [person = 4, tense = present], which indicates that the word "sommes" is first person, plural, and present tense. The feature set for the word "présente" is [gender - feminine, number = singular], which indicates that the word "présente" has feminine gender and is singular in number.

After the feature set for each word in the selected recognition candidate is retrieved (step 1925), the speech recognition system arranges the words in the selected recognition candidate into phrases (step 1930). A phrase is a combination of words that are related to each other. For example, in the selected recognition candidate "le bel enfants jouait," a noun phrase comprises "le bel enfants" and a verb phrase comprises "jouait." The speech recognition system arranges the words into phrases based on the grammatical categories of each of the words.

Figs. 20B and 21B show word phrases 2025 and 2125 for the selected recognition candidates 2005 and 2105. For example, "étaient présente" is a verb phrase, "cinquante personnes" is a noun phrase, and "la" is a noun phrase.

After arranging the words into phrases (step 1930), the speech recognition system determines the relationships among (or between) those phrases using a set of phrase rules (step 1935). For example, in the selected recognition candidate "le bel enfants jouait," the speech recognition system uses the rule that a noun phrase is the subject of a verb phrase to determine that "le bel enfants" is the subject of "jouait."

Figs. 20B and 21B show phrase relationships 2030 and 2130 for the selected recognition candidates 2005 and 2105. For example, in the selected recognition candidate 2005, the word "nous" is the subject of the verb phrase "sommes partagés." In the selected recognition candidate 2105, the noun phrase "cinquante personnes" is the subject of verb phrase "étaient présente."

After the relationships among the phrases have been determined (step 1935), the speech recognition system resolves conflicts in the feature sets (step 1940) by replacing each of the words in the selected recognition candidate by that word's homophones or near-homophones. For example, the speech recognition system may resolve the conflict in the selected recognition candidate "le bel enfants jouait" between the word "enfants" (which is plural) and the words "jouait," "le," and "bel," which are singular, by replacing the word "enfants" with its singular homophone "enfant."

Referring to Fig. 20B, the speech recognition system resolves the conflict between the word "partagés," which is masculine in gender and plural in number, and the word "la," which is feminine in gender and singular in number, by replacing the word "partagés" with the word "partagee," which is feminine in gender and singular in number. Fig. 20B shows the words 2035 in the candidate after conflicts are resolved.

Referring to Fig. 21B, the speech recognition system resolves the conflict between the words "personnes" and "cinquante," which are plural in number and the word "présente," which is singular in number, by replacing the word "présente" with the word "présentes," which is plural in number. In this way, all of the relevant words in the selected recognition candidate 2105 agree in number. Also shown in Fig. 21B are the words 2135 in the candidate after conflicts are resolved.

The speech recognition system replaces a word in the selected recognition candidate with homophones or near-homophones of that word if the replacement word fixes the conflict in the feature sets. The speech recognition system determines which homophones in the selected recognition candidate should be replaced using the feature set information of non-homophone words in the selected recognition candidate. In this way, the speech recognition system may rely on results that were most likely correct. For example, in the selected recognition candidate "nous nous la sommes partagés," the words "nous," "la," and "sommes" are non-homophones. The speech recognition system uses the rule that a past participle must inherit the feature set of its object when replacing the word "partagés" with the word "partagée" because "la" is an object of the past participle "partagés." Because "la" is feminine and singular, "partagés" must also be feminine and singular. Therefore, the speech recognition system replaces "partagés" with "partagée."

When the conflict is resolved, the speech recognition system outputs the alternative recognition candidate as the selected recognition candidate (step 1945). In one implementation, the speech recognition system assigns a better score to the alternative recognition candidate than the selected recognition candidate because the user presumably wanted to correct the best-scoring recognition candidate.

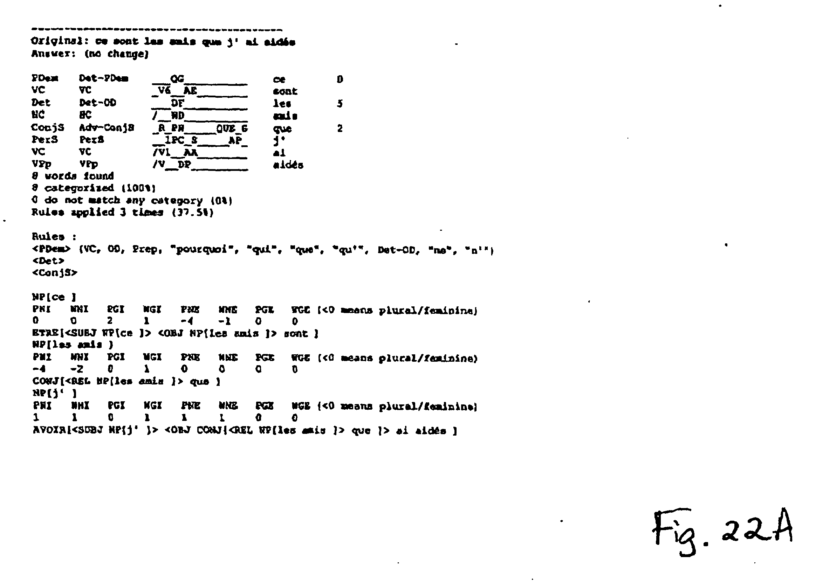

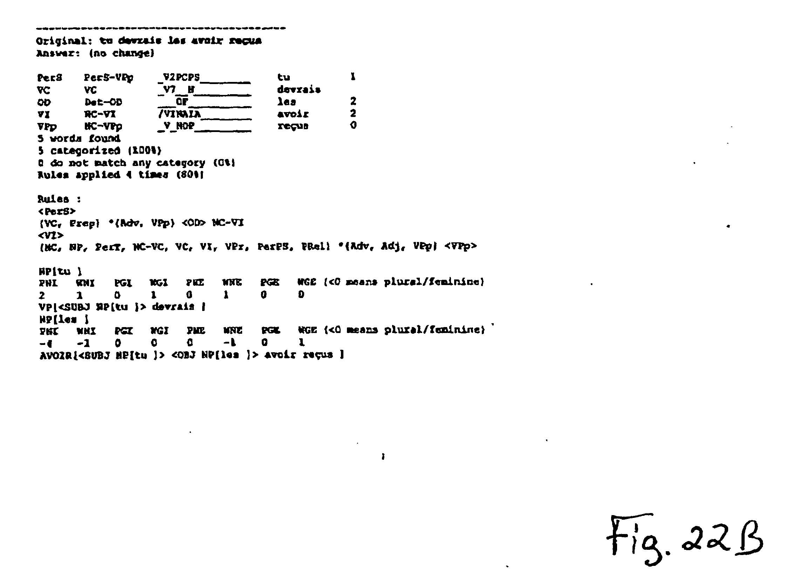

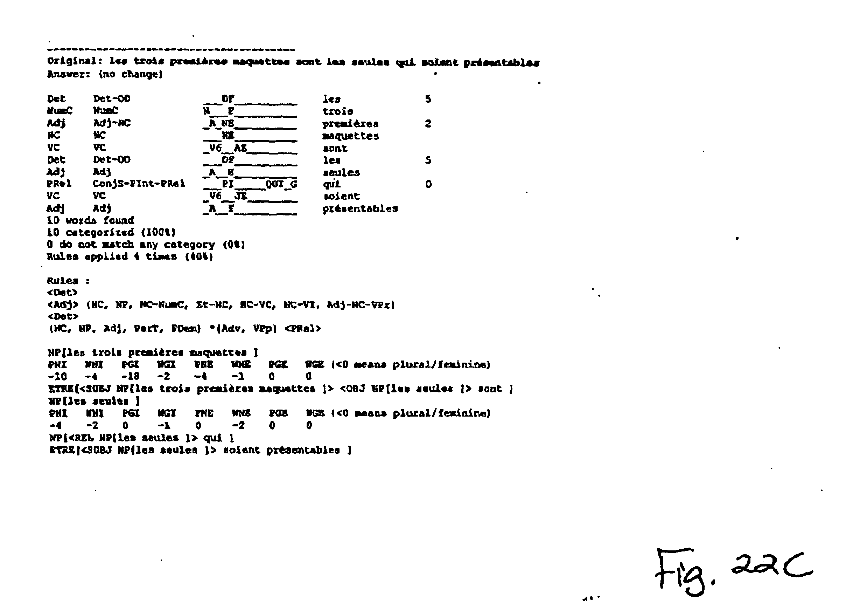

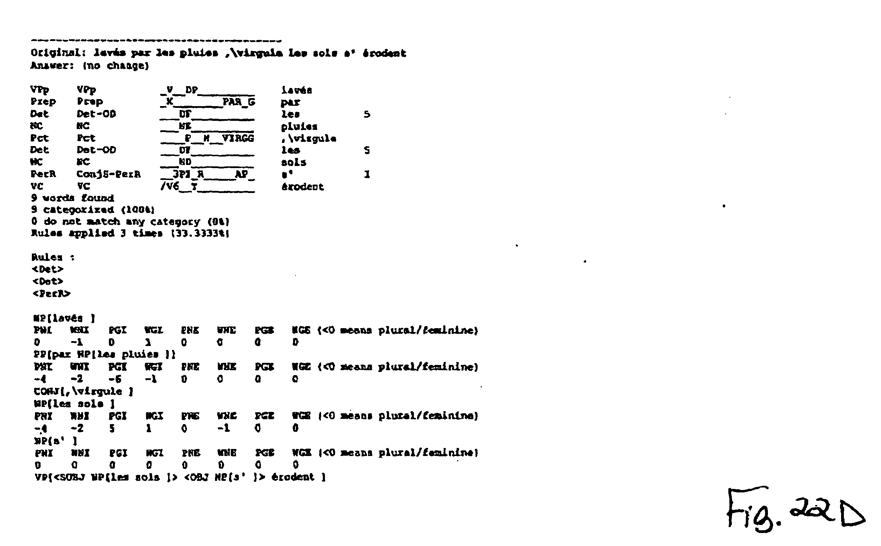

If the speech recognition system is unable to resolve any conflicts in the selected recognition candidate, then the selected recognition candidate would be the alternative recognition candidate. Referring to Figs. 22A-22D, selected recognition candidates "ce sont les amis que j' ai aidés," "tu devrais les avoir reçus," "les trois premières maquettes sont les seules qui soient présentables," and "lavés par les pluies ,\virgule les sols s'érodent," respectively, remain unchanged after the speech recognition system performs procedure 1740.

The speech recognition system determines if the choice list is full (step 1950). If not, the speech recognition system determines if there are any other recognition candidates from the choice list that contain homophones (step 1955). If there are other recognition candidates that contain homophones (step 1955), the speech recognition system selects the next best-scoring recognition candidate for review (step 1910). If the choice list if full (step 1950) or if there are no other recognition candidates that contain homophones (step 1955), then, referring again to Fig. 17, the speech recognition system presents the alternative choice list (made up of original recognition candidates and/or alternative recognition candidates) to the user (step 1745) by, for example, displaying the alternative choice list in a correction dialog box.

Referring again to Fig. 17, the speech recognition system performs the procedure 1740 in a way that is imperceptible to the user. The speech recognition system may not always shift the feature sets of homophones in a phrase correctly. This may happen because there may be several interpretations of a homophone. This may also happen if there are no non-homophones in the selected recognition candidate. When this happens, the speech recognition system would be unable to compare the feature set of a homophone to a non-homophone. Thus, the speech recognition system would align all feature sets of the homophones (for example, replace homophones having mixed feature sets with homophones having a single feature set). In this case, the speech recognition system may perform an incorrect alignment.

If the top recognition candidate includes a homophone correction command (step 1735), then the speech recognition system begins processing of the homophone correction command by finding a previously-recognized utterance that includes the <word> from the homophone correction command (step 1770). In some implementations, the command is limited to require the <word> to be one that is visible on the display. This limitation simplifies the task of finding the appropriate utterance to be corrected.

Next, the utterance to be corrected is modified by replacing <word> with a variation of <word> that includes <ending> (step 1775). The speech recognition system then processes the modified utterance (step 1780) by resolving conflicts in feature sets of phrases in the best-scoring recognition candidate as discussed above with reference to Fig. 19. Thus, the features of the homophone formed from the <word> and <ending> should agree with features of the relevant non-homophone words in the best-scoring recognition candidate. If the features are not in agreement, then the speech recognition system modifies the recognition candidate in accordance with the <word> and <ending> such that the features of the relevant non-homophone words agree with the features of the replacement homophone.

For example, in Figs. 18A and 18C, the utterance to be corrected 1800 is "ce sont les amis que j' ai aidés et protégés" and the user has spoken the homophone correction command "ecrire amis ies" 1820. The speech recognition system finds the root "amis" in the utterance to be corrected 1800 and determines the word formed by the root "amis" and the ending "ies," which, in this example is "amies."

After replacing "amis" with "amies," the speech recognition system may review all of the words in the candidate 1800 to determine if there are any other homophones that conflict in features with "amies." Here, the speech recognition system determines that replacing "amis," which is masculine, with "amies," which is feminine, requires the masculine words "aidés" and "protégés" to be replaced with the feminine homophones "aidées" and "protégées," respectively, to resolve conflicts in the gender feature.

As another example, in Figs. 18B and 18D, the utterance to be corrected 1805 is "par la beauté de cours intérieurs fermés qui avait été attribuée à..." and the user has entered the homophone correction command 1825 "ecrire attribuée ées." The speech recognition system combines the root "attribuée" with the ending "ées" to form the word "attribuées." The speech recognition system initially processed "la beauté" as the subject of "avait été attribué." However, because the user corrected the word "attribué," the speech recognition system resolves the conflict and processes "cours intérieures fermées" as the subject of "avaient été attribuées."

If the speech recognition system determines (step 1785) that there are multiple possible alternative homophone recognition results, then the speech recognition system displays the correction dialog box (step 1745). For example, the speech recognition system may determine that more than one word may be formed from the word "attribuée" and the word "ées," in which case there may be several different alternative homophone recognition candidates with resolved conflicts.

After display of the correction dialog box (step 1745), the speech recognition system enters correction mode (step 1750) and processes the best-scoring recognition candidate and input from the user (step 1755) until the system determines that correction is complete (step 1760). If correction is complete (step 1760), the speech recognition system exits correction mode and clears the correction dialog box (step 1765). The system then waits for further recognition results (step 1705).

If the speech recognition system determines (step 1785) that there are not multiple alternative homophone recognition results, and if the speech recognition system determines there is only one possible alternative homophone recognition result based on processing (step 1790), then the speech recognition system replaces the utterance to be corrected with the alternative homophone recognition result (step 1792) and waits for receipt of the next set of recognition candidates (step 1705).

If the speech recognition system identifies no alternative homophone recognition results, this indicates that the combination of <word> and <ending> does not generate a homophone. In this case, the speech recognition system notifies the user (step 1795) that the homophone correction command was unsuccessful. Optionally, the speech recognition system may display a correction dialog box.

Other embodiments are within the scope of the following claims. For example, the techniques described here are not limited to any particular hardware or software configuration; they may find applicability in any computing or processing environment that may be used for speech recognition. The techniques may be implemented in hardware or software, or a combination of the two. Preferably, the techniques are implemented in computer programs executing on programmable computers that each include a processor, a storage medium readable by the processor (including volatile and non-volatile memory and/or storage elements), at least one input device, and at least one output device. Program code is applied to data entered using the input device to perform the functions described and to generate output information. The output information is applied to one or more output devices.

Each program is preferably implemented in a high level procedural or object oriented programming language to communicate with a computer system. However, the programs can be implemented in assembly or machine language, if desired. In any case, the language may be a compiled or interpreted language.

Each such computer program is preferably stored on a storage medium or device (for example, CD-ROM, hard disk or magnetic diskette) that is readable by a general or special purpose programmable computer for configuring and operating the computer when the storage medium or device is read by the computer to perform the procedures described in this document. The system may also be considered to be implemented as a computer-readable storage medium, configured with a computer program, where the storage medium so configured causes a computer to operate in a specific and predefined manner.

In the described implementation, the speech recognition system only generates one alternative homophone choice for each choice provided. The alternative is given a better score so that it will be preferred to the original choice and appear during dictation. The old choice is not destroyed or penalized. The alternative is neither acoustically rescored nor rescored using language models. In other implementations, the speech recognition system may generate more than a single alternative recognition candidate, and the original recognition candidate may not be penalized.

The speech recognition system may also implement the procedure 1700 with n-to-m homophones.

In the described implementation for pure homophones and near homophones, the homophone correction command is "write <word> <ending>." For n-to-m homophones, the homophone correction command may be "write <homophone> <affix>" or "write <affix> <homophone>," where <homophone> represents n words and <affix> is the prefix or suffix that should be combined with the homophone to form the corrected homophone. Using the example above, if the speech recognition system mistakenly recognizes "un patient" as "impatient," the user may speak "ecrire un impatient" to correct the homophone.

### Claims

1. A method of correcting incorrect text associated with recognition errors in computer-implemented speech recognition, the method comprising:

    performing speech recognition on an utterance to produce a recognition result for the utterance;
    identifying a correction command in the recognition result for the utterance, the correction command including:

       a set of one or more words from a prior recognition result, and
       an affix that may be combined with the set of one or more words to form a homophone of the one or more words; and

    generating the homophone from the set of one or more words and the affix based on features of one or more words from the prior recognition result that are not included in the set of one or more words.

2. The method of claim 1, further comprising replacing the set of one or more words from the prior recognition result with the homophone.

3. The method of claim 1, wherein generating the homophone from the set of one or more words and the affix comprises combining the set of one or more words and the affix in such a way as to match the features of the one or more words from the prior recognition result with the homophone.

4. The method of claim 1, wherein generating the homophone includes:

    presenting a list of possible homophones; and
    receiving a selection of one homophone from the list.

5. The method of claim 1, wherein the correction command includes "ecrire <word> <ending>," where <word> represents the set of one or more words from the prior recognition result and <ending> represents the affix.

6. The method of claim 5, wherein the set of one or more words includes only one word and the affix is an ending.

7. The method of claim 1, wherein the homophone is pronounced exactly the same as the set of one or more words from the prior recognition result.

8. The method of claim 1, wherein one or more phonemes of the homophone are included in the set of one or more words from the prior recognition result.

9. The method of claim 1, wherein the homophone includes a set of one or more words.

10. The method of claim 1, wherein the affix is an ending.

11. A computer-implemented speech recognition system comprising:

> a processor;
> an input device that receives an utterance;
> a storage device storing software instructions performed by the processor;
> means for performing speech recognition on the utterance to produce a recognition result for the utterance;
> means for identifying a correction command in the recognition result for the utterance, the correction command including:
>
>> a set of one or more words from a prior recognition result, and
>> an affix that may be combined with the set of one or more words to form a homophone of the one or more words; and
>
> means for generating the homophone from the set of one or more words and the affix based on features of one or more words from the prior recognition result that are not included in the set of one or more words.

12. The system of claim 11, wherein the storage device stores software instructions performed by the processor for replacing the set of one or more words from the prior recognition result with the homophone.

13. The system of claim 11, wherein the means for generating the homophone from the set of one or more words and the affix include means for combining the set of one or more words and the affix in such a way as to match the features of the one or more words from the prior recognition result with the homophone.

14. The system of claim 11, wherein the means for generating the homophone include means for :

> presenting a list of possible homophones; and
> receiving a selection of one homophone from the list.

15. The system of claim 11, wherein the correction command includes "ecrire <word> <ending>," where <word> represents the set of one or more words from the prior recognition result and <ending> represents the affix.

16. The system of claim 15, wherein the set of one or more words includes only one word and the affix is an ending.

17. The system of claim 11, wherein the homophone is pronounced exactly the same as the set of one or more words from the prior recognition result.

18. The system of claim 11, wherein one or more phonemes of the homophone are included in the set of one or more words from the prior recognition result.

19. The system of claim 11, wherein the homophone includes a set of one or more words.

20. The system of claim 11, wherein the affix is an ending.

21. Computer software, tangibly embodied in a computer-readable medium or in a propagated carrier signal, for correcting incorrect text associated with recognition errors, the software comprising the following code segments to per form their corresponding operation when run on a computer system.

> a first code segment to perform speech recognition on the utterance to produce a recognition result for the utterance;
a second code segment to identify a correction command in the recognition result for the utterance, the correction command including;

a set of one or more words from a prior recognition result, and
an affix that may be combined with the set of one or more words to form a homophone of the one or more words; and

a third code segment to generate the homophone from the set of one or more words and the affix based on features of one or more words from the prior recognition result that are not included in the set of one or more words.

22. The software of claim 21, further comprising a fourth code segment to replace the set of one or more words from the prior recognition result with the homophone.

23. The software of claim 21, wherein the third code segment includes a code segment to combine the set of one or more words and the affix in such a way as to match the features of the one or more words from the prior recognition result with the homophone.

24. The software of claim 21, wherein the third code segment includes:

a code segment to present a list of possible homophones; and
a code segment to receive a selection of one homophone from the list.

25. The software of claim 21, wherein the correction command includes "ecrire <word> <ending>," where <word> represents the set of one or more words from the prior recognition result and <ending> represents the affix.

26. The software of claim 25, wherein the set of one or more words includes only one word and the affix is an ending.

27. The software of claim 21, wherein the homophone is pronounced exactly the same as the set of one or more words from the prior recognition result.

28. The software of claim 21, wherein one or more phonemes of the homophone are included in the set of one or more words from the prior recognition result.

29. The software of claim 21, wherein the homophone includes a set of one or more words.

30. The software of claim 21, wherein the affix is an ending.


**Patentansprüche**

1. Verfahren zum Korrigieren eines fehlerhaften Textes in Verbindung mit Erkennungsfehlern in der computerunterstützten Spracherkennung, wobei das Verfahren umfasst:

Durchführen einer Spracherkennung zu einer Äußerung, um ein Erkennungsergebnis für die Äußerung zu erzeugen;
Identifizieren eines Korrekturbefehls in dem Erkennungsergebnis für die Äußerung, wobei der Korrekturbefehl umfasst:

eine Gruppe aus ein oder mehreren Worten eines früheren Erkennungsergebnisses, und
ein Affix, das mit der Gruppe aus ein oder mehreren Worten kombiniert werden kann,
um ein Homophon der ein oder mehreren Worte zu bilden; und

Erzeugen des Homophons aus der Gruppe von ein oder mehreren Worten und des Affix basierend auf den Merkmalen ein oder mehrerer Wörter des früheren Erkennungsergebnisses, die nicht in der Gruppe aus ein oder mehreren Worten enthalten sind.

2. Verfahren nach Anspruch 1, mit einem Ersetzen der Gruppe aus ein oder mehreren Worten des früheren Erkennungsergebnisses durch das Homophon.

3. Verfahren nach Anspruch 1, in welchem das Erzeugen des Homophons aus der Gruppe aus ein oder mehreren Wörtern und des Affix ein Kombinieren der Gruppe von ein oder mehreren Worten und des Affix in der Weise umfasst, dass die Merkmale der ein oder mehreren Wörter des früheren Erkennungsergebnisses mit dem Homophon zusammenpassen.

4. Verfahren nach Anspruch 1, in welchem das Erzeugen des Homophons umfasst:

    Präsentieren einer Liste möglicher Homophone; und
    Erhalten einer Auswahl eines Homophons aus der Liste.

5. Verfahren nach Anspruch 1, in welchem der Korrekturbefehl umfasst "ecrire <wort><endung>", wobei <wort> die Gruppe von ein oder mehrere Worten des früheren Erkennungsergebnisses repräsentiert und <endung> das Affix repräsentiert.

6. Verfahren nach Anspruch 5, in weichem die Gruppe aus ein oder mehreren Worten nur ein Wort umfasst und das Affix eine Endung ist.

7. Verfahren nach Anspruch 1, in welchem das Homophon genauso wie die Gruppe aus ein oder mehreren Worten des früheren Erkennungsergebnisses betont wird.

8. Verfahren nach Anspruch 1, in welchem ein oder mehrere Phoneme des Homophons in der Gruppe aus ein oder mehreren Worten des früheren Erkennungsergebnisses enthalten sind.

9. Verfahren nach Anspruch 1, in welchem das Homophon eine Gruppe aus ein oder mehreren Worten umfasst.

10. Verfahren nach Anspruch 1, in welchem das Affix eine Endung ist.

11. Computerunterstütztes Spracherkennungssystem mit:

    einem Prozessor;
    einer Eingabeeinrichtung, die eine Äußerung erhält;
    einer Speichereinrichtung zum Speichern von Softwarebefehlen, die von dem Prozessor durchgeführt werden;
    Mitteln zum Durchführen einer Spracherkennung zu der Äußerung, um ein Erkennungsergebnis für die Äußerung zu erzeugen;
    Mitteln zum identifizieren eines Korrekturbefehls in dem Erkennungsergebnis für die Äußerung, wobei der Korrekturbefehl umfasst:

        eine Gruppe aus ein oder mehreren Worten eines früheren Erkennungsergebnisses, und
        ein Affix, das mit der Gruppe aus ein oder mehreren Worten kombiniert werden kann, um ein Homophon der ein oder mehreren Worte zu bilden; und
        Mittel zum Erzeugen des Homophons aus der Gruppe aus ein oder mehreren Worten und des Affix basierend auf Merkmalen von ein oder mehreren Worten des früheren Erkennungsergebnisses, die nicht in der Gruppe aus ein oder mehreren Worten enthalten sind.

12. System nach Anspruch 11, in welchem die Speichereinrichtung von dem Prozessor ausgeführte Softwarebefehle zum Ersetzen der Gruppe aus ein oder mehreren Worten des früheren Erkennungsergebnisses durch das Homophon speichert.

13. System nach Anspruch 11, in welchem das Mittel zum Erzeugen des Homophons aus der Gruppe aus ein oder mehreren Worten und des Affix Mittel zum Kombinieren der Gruppe aus ein oder mehreren Worten und des Affix umfasst, derart, dass die Merkmale der ein oder mehreren Worte des früheren Erkennungsergebnisses mit dem Homophon zusammenpassen.

14. System nach Anspruch 11, in welchem die Mittel zum Erzeugen des Homophons Mittel umfassen:

    zum Präsentieren einer Liste möglicher Homophone; und

zum Erhalten einer Auswahl eines Homophons aus der Liste.

15. System nach Anspruch 11, in welchem der Korrekturbefehl umfasst "ecrire <wort><endung>", wobei <wort> die Gruppe aus ein oder mehreren Worten des früheren Erkennungsergebnisses repräsentier und <endung> das Affix repräsentiert.

16. System nach Anspruch 15, in welchem die Gruppe aus ein mehreren Worten nur ein Wort enthält und das Affix eine Endung ist.

17. System nach Anspruch 11, in welchem das Homophon genauso wie die Gruppe aus ein oder mehreren Worten des früheren Erkennungsergebnisses betont wird.

18. System nach Anspruch 11, in welchem ein oder mehrere Phoneme des Homophons in der Gruppe aus ein oder mehreren Worten des früheren Erkennungsergebnisses enthalten sind.

19. System nach Anspruch 11, in welchem das Homophon eine Gruppe aus ein oder mehreren Worten enthält.

20. System nach Anspruch 11, in welchem das Affix eine Endung ist.

21. Computersoftware, merklich ausgeführt in einem computerlesbaren Medium oder in einem mitlaufenden Trägersignal, zum Korrigieren eines fehlerhaften Textes in Verbindung mit Erkennungsfehlern, wobei die Software die folgenden Codesegmente umfasst, um ihre entsprechenden Operationen durchzuführen, wenn sie auf einem Computersystem läuft:

ein erstes Codesegment, um eine Spracherkennung zu der Äußerung durchzuführen, um ein Erkennungsergebnis für die Äußerung zu erzeugen;
ein zweites Codesegment, um einen Korrekturbefehl in dem Erkennungsergebnis für die Äußerung zu identifizieren, wobei der Korrekturbefehl umfasst:

eine Gruppe aus ein oder mehreren Worten eines früheren Erkennungsergebnisses, und
ein Affix, das mit der Gruppe aus ein oder mehreren Worten kombiniert werden kann,
um ein Homophon der ein oder mehreren Worte zu bilden; und

ein drittes Codesegment, um das Homophon aus der Gruppe aus ein oder mehreren Worten und des Affix basierend auf Merkmalen der ein oder mehreren Worte des früheren Erkennungsergebnisses zu erzeugen, die nicht in der Gruppe aus ein oder mehreren Worten enthalten sind.

22. Software nach Anspruch 21, ferner mit einem vierten Codesegment, um die Gruppe aus ein oder mehreren Worten des früheren Erkennungsergebnisses durch das Homophon zu ersetzen.

23. Software nach Anspruch 21, in welcher das dritte Codesegment ein Codesegment umfasst, um die Gruppe aus ein oder mehreren Worten und das Affix derart zu kombinieren, dass die Merkmale der ein oder mehreren Worte des früheren Erkennungsergebnisses mit dem Homophon zusammenpassen.

24. Software nach Anspruch 21, in welcher das dritte Codesegment umfasst:

ein Codesegment, um eine Liste möglicher Homophone zu präsentieren; und
ein Codesegment, um eine Auswahl eines Homophons aus der Liste zu erhalten.

25. Software nach Anspruch 21, in welcher der Korrekturbefehl umfasst: "ecrire <wort><endung>", wobei <wort> die Gruppe aus oder mehreren Worten des früheren Erkennungsergebnisses repräsentiert und <endung> das Affix repräsentiert.

26. Software nach Anspruch 25, in welcher die Gruppe aus ein oder mehreren Worten nur ein Wort umfasst und das Affix eine Endung ist.

27. Software nach Anspruch 21, in welcher das Homophon genauso wie die Gruppe aus ein oder mehreren Worten des früheren Erkennungsergebnisses betont wird.

**28.** Software nach Anspruch 21, in welcher ein oder mehrere Phoneme des Homophons in der Gruppe aus ein oder mehreren Worten des früheren Erkennungsergebnisses enthalten sind.

**29.** Software nach Anspruch 21, in welcher das Homophon eine Gruppe aus ein oder mehreren Worten enthält.

**30.** Software nach Anspruch 21, in welcher das Affix eine Endung ist.


**Revendications**

**1.** Procédé permettant de corriger un texte incorrect associé aux erreurs de reconnaissance dans la reconnaissance vocale mise en oeuvre par ordinateur, le procédé comprenant :

l'accomplissement d'une reconnaissance vocale sur un énoncé pour produire un résultat de reconnaissance pour l'énoncé ;
l'identification d'une commande de correction dans le résultat de reconnaissance pour l'énoncé, la commande de correction comprenant :

un ensemble d'un ou plusieurs mots provenant d'un résultat de reconnaissance antérieur, et
un affixe qui peut être combiné avec l'ensemble d'un ou plusieurs mots pour former un homophone d'un ou plusieurs mots ; et

la génération de l'homophone à partir de l'ensemble d'un ou plusieurs mots et de l'affixe en se basant sur les caractéristiques d'un ou plusieurs mots provenant du résultat de reconnaissance antérieur qui ne sont pas inclus dans l'ensemble d'un ou plusieurs mots.

**2.** Procédé selon la revendication 1, comprenant en outre le remplacement de l'ensemble d'un ou plusieurs mots provenant du résultat de reconnaissance antérieur par l'homophone.

**3.** Procédé selon la revendication 1, dans lequel la génération de l'homophone à partir de l'ensemble d'un ou plusieurs mots et de l'affixe comprend la combinaison de l'ensemble d'un ou plusieurs mots et de l'affixe de manière à adapter les caractéristiques des un ou plusieurs mots provenant du résultat de reconnaissance antérieur à l'homophone.

**4.** Procédé selon la revendication 1, dans lequel la génération de l'homophone comprend :

la présentation d'une liste d'homophones possibles ; et
la réception d'une sélection d'un homophone à partir de la liste.

**5.** Procédé selon la revendication 1, dans lequel la commande de correction comprend "ecrire<word><ending>" où <word> représente l'ensemble d'un ou plusieurs mots provenant du résultat de reconnaissance et <ending> représente l'affixe.

**6.** Procédé selon la revendication 5, dans lequel l'ensemble d'un ou plusieurs mots comprend un seul mot et l'affixe est une terminaison.

**7.** Procédé selon la revendication 1, dans lequel l'homophone est prononcé exactement de la même manière que l'ensemble d'un ou plusieurs mots provenant du résultat de reconnaissance antérieur.

**8.** Procédé selon la revendication 1, dans lequel un ou plusieurs phonèmes de l'homophone sont inclus dans l'ensemble d'un ou plusieurs mots provenant du résultat de reconnaissance antérieur.

**9.** Procédé selon la revendication 1, dans lequel l'homophone comprend un ensemble d'un ou plusieurs mots.

**10.** Procédé selon la revendication 1, dans lequel l'affixe est une terminaison.

**11.** Système de reconnaissance vocale mis en oeuvre par ordinateur comprenant :

un processeur;

un dispositif d'entrée qui reçoit un énoncé ;

un dispositif de stockage stockant des instructions logicielles effectuées par le processeur ;

des moyens pour effectuer une reconnaissance vocale de l'énoncé pour produire un résultat de reconnaissance pour l'énoncé ;

des moyens pour identifier une commande de correction dans le résultat de reconnaissance pour l'énoncé, la commande de correction comprenant:

un ensemble d'un ou plusieurs mots provenant d'un résultat de reconnaissance antérieur, et

un affixe qui peut être combiné avec l'ensemble d'un ou plusieurs mots pour former un homophone des un ou plusieurs mots ; et

des moyens pour générer l'homophone à partir de l'ensemble d'un ou plusieurs mots et de l'affixe en se basant sur les caractéristiques des un ou plusieurs mots provenant du résultat de reconnaissance antérieur qui ne sont pas inclus dans l'ensemble des un ou plusieurs mots.

12. Système selon la revendication 11, dans lequel le dispositif de stockage stocke des instructions logicielles effectuées par le processeur pour remplacer l'ensemble des un ou plusieurs mots provenant du résultat de reconnaissance antérieur par l'homophone.

13. Système selon la revendication 11, dans lequel les moyens pour générer l'homophone à partir de l'ensemble d'un ou plusieurs mots et l'affixe comprennent des moyens combinant l'ensemble des uns ou plusieurs mots et l'affixe de manière à adapter les caractéristiques des un ou plusieurs mots provenant du résultat de reconnaissance antérieur à l'homophone.

14. Système selon la revendication 11, dans lequel les moyens pour générer l'homophone comprennent des moyens pour :

présenter une liste d'homophones possibles ; et

recevoir une sélection d'un homophone à partir de la liste.

15. Système selon la revendication 11, dans lequel la commande de correction comprend "ecrire<word><ending)" où <word> représente l'ensemble d'un ou plusieurs mots provenant du résultat de reconnaissance et <ending> représente l'affixe.

16. Système selon la revendication 15, dans lequel l'ensemble d'un ou plusieurs mots comprend un seul mot et l'affixe est une terminaison.

17. Système selon la revendication 11, dans lequel l'homophone est prononcé exactement de la même manière que l'ensemble d'un ou plusieurs mots provenant du résultat de reconnaissance antérieur.

18. Système selon la revendication 11, dans lequel un ou plusieurs phonèmes de l'homophone sont inclus dans l'ensemble d'un ou plusieurs mots provenant du résultat de reconnaissance antérieur.

19. Système selon la revendication 11, dans lequel l'homophone comprend un ensemble d'un ou plusieurs mots.

20. Système selon la revendication 11, dans lequel l'affixe est une terminaison.

21. Logiciel informatique, mis en oeuvre de façon tangible dans un support lisible par ordinateur ou dans un signal porteur propagé, pour corriger un texte incorrect associé à des erreurs de reconnaissance, les segments de code suivants étant destinés à effectuer leurs opérations correspondantes lorsqu'ils sont exécutés sur un système informatique :

un premier segment de code destiné à effectuer la reconnaissance vocale sur un énoncé pour produire un résultat de reconnaissance pour l'énoncé ;

un deuxième segment de code destiné à identifier une commande de correction dans le résultat de reconnaissance pour l'énoncé, la commande de correction comprenant :

un ensemble d'un ou plusieurs mots provenant d'un résultat de reconnaissance antérieur, et

un affixe qui peut être combiné avec l'ensemble d'un ou plusieurs mots pour former un homophone des uns ou plusieurs mots ; et

un troisième segment de code destiné à générer l'homophone à partir de l'ensemble d'un ou plusieurs mots et de l'affixe en se basant sur les caractéristiques des un ou plusieurs mots provenant du résultat de reconnaissance antérieur qui ne sont pas inclus dans l'ensemble des un ou plusieurs mots.

**22.** Logiciel selon la revendication 21, comprenant en outre un quatrième segment de code pour remplacer l'ensemble des un ou plusieurs mots provenant du résultat de reconnaissance antérieur par l'homophone.

**23.** Logiciel selon la revendication 21, dans lequel le troisième segment de code comprend un segment de code pour combiner l'ensemble des un ou plusieurs mots et l'affixe de telle manière à adapter les caractéristiques des un ou plusieurs mots provenant du résultat de reconnaissance antérieur à l'homophone.

**24.** Logiciel selon la revendication 21, dans lequel le troisième segment de code comprend :

un segment de code pour présenter une liste d'homophones possibles ; et
un segment de code pour recevoir une sélection d'un homophone à partir de la liste.

**25.** Logiciel selon la revendication 21, dans lequel la commande de correction comprend "ecrire<word><ending)" où <word> représente l'ensemble d'un ou plusieurs mots provenant du résultat de reconnaissance et <ending> représente l'affixe.

**26.** Logiciel selon la revendication 25, dans lequel l'ensemble d'un ou plusieurs mots comprend un seul mot et l'affixe est une terminaison.

**27.** Logiciel selon la revendication 21, dans lequel l'homophone est prononcé exactement de la même manière que l'ensemble d'un ou plusieurs mots provenant du résultat de reconnaissance antérieur.

**28.** Logiciel selon la revendication 21, dans lequel un ou plusieurs phonèmes de l'homophone sont inclus dans l'ensemble d'un ou plusieurs mots provenant du résultat de reconnaissance antérieur.

**29.** Logiciel selon la revendication 21, dans lequel l'homophone comprend un ensemble d'un ou plusieurs mots.

**30.** Logiciel selon la revendication 21, dans lequel l'affixe est une terminaison.

Fig. 1

**108**

Display

**100**

**102** **104** **106** **110**

**130**

**128**

Digital Port

**132**

**118** **114**

Hard Drive

Memory

**120**

I/O Unit

**116**

**126**

**140**

Operating System

Sound Card

Analog Port

Interface

**122**

**142**

Parser

Application Program

**112**

**124**

Back End

Speech Recognition Software

CPU

**144**

Fig. 2

Active Vocabulary 230

Acoustic Models 235

Constraint Grammars 225

Backup Dictionary 245

Control/Interface Module 220

Recognizer 215

Pre-Filtering Procedure 240

Front-End Processing Module 200

recognition candidates

control

lattice of words

requests

frames of parameters 210

digital samples 205

300

305 — Produce X(f)

310 — Determine
log (X(f))²

315 — Frequency warping

320 — Filter bank analysis

325 — Cepstral analysis

330 — Channel normalization

335 — Produce cepstral
differences

340 — Produce cepstral
second differences

345 — IMELDA

**Fig. 3**

400

405

"select"

410

420

previously-
recognized
words

415

425

**Fig. 4A**

450

"select"

"four"

"score"

"and"

"seven"

**Fig. 4B**

Fig. 5

Fig. 6

700 — Get next frame

705 — Find an active node with no active, unprocessed subnodes

240

710 — Process node

715 — At highest node? — No → 720 — Go to next node with no unprocessed subnodes

Yes

725 — Process silence

730 — Reseed tree

735 — More words possible? — Yes

No

740 — Return list

**Fig. 7**

800

820

820

820

805   825   810   825   815   830

**Fig. 8A**

512

845

840   850

**Fig. 8B**

505

860

865

**Fig. 8C**

| Frame | 840 ("A") | 805 ("B") | 810 ("C") | 815 ("D") | Next Node ("N") |
|---|---|---|---|---|---|
| 900 — 0 | $0$ | — | — | — | — |
| 905 — 1 | $S_{A1}=A_{A1}$ | $S_{B1}=A_{B1}$ | — | — | — |
| 910 — 2 | $S_{A2}=S_{A1}+A_{A2}$ | $S_{B2}=\min(S_{B1}+stay_B, S_{A1})+A_{B2}$ | $S_{C2}=S_{B1}+leave_B+A_{C2}$ | — | — |
| 915 — 3 | $S_{A3}=S_{A2}+A_{A3}$ | $S_{B3}=\min(S_{B2}+stay_B, S_{A2})+A_{B3}$ | $S_{C3}=\min(S_{C2}+stay_C, S_{B2}+leave_B)+A_{C3}$ | $S_{D3}=S_{C2}+leave_C+A_{D3}$ | — |
| 920 — 4 | $S_{A4}=S_{A3}+A_{A4}$ | $S_{B4}=\min(S_{B3}+stay_B, S_{A3})+A_{B4}$ | $S_{C4}=\min(S_{C3}+stay_C, S_{B3}+leave_B)+A_{C4}$ | $S_{D4}=\min(S_{D3}+stay_D, S_{C3}+leave_C)+A_{D4}$ | $S_{N4}=S_{D2}+leave_D+A_{D4}$ |
| 925 — n | $S_{An}=S_{An-1}+A_{An}$ | $S_{Bn}=\min(S_{Bn-1}+stay_B, S_{An-1})+A_{Bn}$ | $S_{Cn}=\min(S_{Cn-1}+stay_C, S_{Bn-1}+leave_B)+A_{Cn}$ | $S_{Dn}=\min(S_{Dn-1}+stay_D, S_{Cn-1}+leave_C)+A_{Dn}$ | $S_{Nn}=\min(S_{Nn-1}+stay_N, S_{Nn-1}+leave_N)+A_{Nn}$ |

**Fig. 9**

| Frame | 810 ("A") | 805 ("B") | 810 ("C") | 815 ("D") | Next Node ("N") |
|---|---|---|---|---|---|
| 900 — 0 | $S_{A0}=0$ | — | — | — | — |
| 905 — 1 | $S_{A1}=f(S_{A0}, A_{A1})$ | $S_{B1}=f(S_{A0}, A_{B1})$ | — | — | — |
| 910 — 2 | $S_{A2}=f(S_{A1}, A_{A2})$ | $S_{B2}=f(S_{B1}, stay_B, S_{A1}, A_{B2})$ | $S_{C2}=f(S_{B1}, leave_B, A_{C2})$ | — | — |
| 915 — 3 | $S_{A3}=f(S_{A2}, A_{A3})$ | $S_{B3}=f(S_{B2}, stay_B, S_{A2}, A_{B3})$ | $S_{C3}=f(S_{C2}, stay_C, S_{B2}, leave_B, A_{C3})$ | $S_{D3}=f(S_{C2}, leave_C, A_{D3})$ | — |
| 920 — 4 | $S_{A4}=f(S_{A3}, A_{A4})$ | $S_{B4}=f(S_{B3}, stay_B, S_{A3}, A_{B4})$ | $S_{C4}=f(S_{C3}, stay_C, S_{B3}, leave_B, A_{C4})$ | $S_{D4}=f(S_{D3}, stay_D, S_{C3}, leave_C, A_{D4})$ | $S_{N4}=f(S_{D3}, leave_D, A_{D3})$ |
| 925 — n | $S_{An}=f(S_{An-1}, A_{An})$ | $S_{Bn}=f(S_{Bn-1}, stay_B, S_{An-1}, A_{Bn})$ | $S_{Cn}=f(S_{Cn-1}, stay_C, S_{Bn-1}, leave_B, A_{Cn})$ | $S_{Dn}=f(S_{Dn-1}, stay_D, S_{Cn-1}, leave_C, A_{Dn})$ | $S_{Nn}=f(S_{Dn-1}, leave_N, A_{Nn})$ |

**Fig. 10**

EP 1 189 203 B1

1100

1105 — Update
scores/times

1110 — Score(s)
>
Threshold
? — No

Yes

1115 — Deactivate
states/node

1120 — Word to be
added? — No

Yes

1125 — Add words to list

1130 — Save score for
reseeding

Done

**Fig. 11**

*1200*

**Fig. 12**

Initialize lexical tree — 1205

Retrieve frame — 1210

Hypothesis to consider? — 1215

Yes

Go to first hypothesis — 1220

Compare frame to hypothesis — 1225

Update score — 1230

Hypothesis likely? — 1235

Yes          No

Delete hypothesis — 1240

Word ending? — 1245          No

Yes

Set word ending flag — 1250

Additional hypothesis? — 1255

No          Yes

Next hypothesis — 1260

More frames? — 1265

Yes

Word ended? — 1270          No

Yes

Request pre-filtering list — 1275

Create/expand hypotheses — 1280          No

Return recognition candidates — 1285

Fig. 13A

Fig. 13B

250,000

Words

User-
Specific
+
System-
Backup

245

Backup
Dictionary

60,000

1312

230

Active
Vocabulary

0

1300

250,000

Non-
Splittable
Words

Words

1350

1325

Splittable
Words

245

Backup
Dictionary

1315

1320

8,000

230

Active
Vocabulary

0

EP 1 189 203 B1

EP 1 189 203 B1

## Fig. 14A

**French - Before**
Complete Dictation Vocabulary

1400

Words

50,000  100,000  150,000  200,000  250,000

■Active ■Backup

## Fig. 14B

**French - After**
Complete Dictation Vocabulary

250,000

Words

200,000

150,000

100,000

50,000

1402

■Active Words ■Fragments
□Splittable ■Non-splittable

## Fig. 14C

Fragments

1405
1425
1420
1430
1435

Word Fragments

■Word Roots
□True Roots
■Suffixes
■Prefixes

Fig. I5A

**U.S. English - Before** Complete Dictation Vocabulary

Words

250,000
200,000
150,000
100,000
50,000

1500

| ■ Active ■ Backup |

Fig. I5B

U.S. English - After Complete Dictation Vocabulary

Words

250,000
200,000
150,000
100,000
50,000

1502

■ Active Words ■ Fragments
□ Splittable □ Non-splittable

Fig. I5C

Fragments

Word Fragments

1520
1520
1530
1535

□ Word Roots
□ True Roots
■ Suffixes
■ Prefixes

EP 1 189 203 B1

1600

1605 — Determine Fragments

1610 — Generate New Active Vocabulary & Backup Dictionary

1615 — Create Language Model

Fig. 16A

1650

1655 — **Perform Speech Recognition On Utterance**

1660 — **Perform Post-Recognition Processing On Utterance**

Fig. 16B

Fig. 17

"ce sont les amies que j'ai aidées et protégées"

Fig. 18A

"par la beauté de cours intérieures fermées qui
avaient été attribuées à ... "

par la beauté de cours intérieurs fermés
qui avait été attribuée à ...

1805

1810

Fig. 18 B

"ecrire amis ies"  1920

Fig. 18C

"ecrire attribuée ées" ⌐ 1825

```
┌─────────────────────────────────────────────┐
│ ▣ Document                            ▣▣▣    │
├─────────────────────────────────────────────┤
│ □□□□□□□□□□□□□□  □□□□□□□                       │
│ ┌─────────────────────────────────────────┐ │
│ │ par la beauté de cours ¦intérieures Fermées¦│
│ │ qui ¦avaient¦ été ¦attribuées¦ à ...        │
│ │                                           │ │
│ │                                           │ │
│ │                                           │ │
│ │                                         ◣ │ │
│ └─────────────────────────────────────────┘ │
└─────────────────────────────────────────────┘
```
1810

Fig 18D

1740

1900
Select best-scoring recognition candidate

1905
Does selected recognition candidate include homophne?

Yes

No

1915
Retrieve grammatical category for each word in selected recognition candidate

1920
Guess grammatical category for each word

1925
Retrieve feature set for each word based on guessed grammatical category

1930
Arrange words into phrases

1935
Determine relationship among phrases

1940
Resolve conflicts by replacing words

1945
Output alternative candidate

1950
Choice list full?

No

1955
Candidates with homophones?

Yes

No

1910
Select next best-scoring recognition candidate

Yes

Fig. 19

```
-------------------------------------------
Original (best scoring recognition candidate): nous nous la sommes partagés  — 2005
Answer (alternative recognition candidate): nous nous la sommes partagée
```

2015        2000                              2010            2005

| PerS | OD-OI-PerR-PerS-PerT | | __4PF_T_____ | nous | 4 |
| PerR | OD-OI-PerR-PerS-PerT | | __4PF_T_____ | nous | 0 |
| OD   | Det-OD              | | __DB_____  | la   | 0 |
| VC   | NC-VC               | | _V4NEAE_____  | sommes | 0 |
| VPp  | VPp                 | | _V_DP_____  | partagés | |

5 words found
5 categorized (100%)
0 do not match any category (0%)
Rules applied 4 times (80%)

Rules :
<PerS> (Adv) (OD-OI-PerR-PerS-PerT, OD-OI-PerR)
"nous" (Adv) <PerR: "nous">
(PerR, PerS, OI, "qui", "ne", PDem) (PerR-PerS-OD-OI-PerT) <OD>
(PerR, PerS, OD, OI, PDem, PInd, PerR-OD-OI, PerR-PerS-OD-OI-PerT, NP, NC, PRel, PInt) *(Adv, Adj, VPp) <VC>

NP[nous ]

| PNI | WNI | PGI | WGI | PNE | WNE | PGE | WGE | (<0 means plural/feminine) |
|-----|-----|-----|-----|-----|-----|-----|-----|----|
| 0 | -1 | 0 | 1 | 0 | -1 | 0 | 0 | |

NP[nous ]

| PNI | WNI | PGI | WGI | PNE | WNE | PGE | WGE | (<0 means plural/feminine) |
|-----|-----|-----|-----|-----|-----|-----|-----|----|
| 0 | 0 | 0 | 0 | 0 | 0 | 0 | | |

NP[la ]

| PNI | WNI | PGI | WGI | PNE | WNE | PGE | WGE | (<0 means plural/feminine) |
|-----|-----|-----|-----|-----|-----|-----|-----|----|
| 2 | 1 | -2 | -1 | 0 | -1 | 0 | 1 | |

ETRE[<SUBJ NP[nous ]> <IOBJ NP[nous ]> <OBJ NP[la ]> sommes partagée ]

2017

Fig. 20A

EP 1 189 203 B1

| nous | nous | la | sommes | partagés | |
|---|---|---|---|---|---|
| OD, OI, PerR, PerS, PerT | OD, OI, PerR, PerS, PerT | Det, OD | NC, VC | VPp | ← 2005 |
| PerS | PerR | OD | VC | VPp | ← 2010 |
| Gender neutral Number plural | Gender neutral Number plural | Gender feminine Number singular | Person 4 Tense présent | Gender masculine Number plural | ← 2015 |
| Noun phrase | Noun phrase | Noun phrase | Verb phrase | | ← 2020 |
| Subject of verb | Indirect object pronoun | Direct object pronoun | Verb | | ← 2025 |
| nous | nous | la | sommes | partagée | ← 2030 |
| Gender neutral Number plural Person 4 | Gender neutral Number plural | Gender feminine Number singular | Person 4 Tense présent | Gender feminine Number singular | ← 2035 |

Fig. 20 B

EP 1 189 203 B1

```
-----------------------------------------------
· Original (best scoring recognition candidate): quelque cinquante personnes étaient présente ←  2105
  Answer (alternative recognition candidate): quelque cinquante personnes étaient présentes

  2115      2100      2110                    2105
  ⌒⌒        ⌒⌒      ⌒⌒⌒⌒                     ⌒⌒⌒
  Adv       Adj-Adv   _Q__C_____          quelque      0
  NumC      NumC      N___F_____          cinquante
  NC        NC        ___NE_____          personnes
  VC        VC        /V6__BE_____          étaient
  Adj       Adj-VC    _E8_BT_____          présente     4


  5 words found
  5 categorized (100%)
  0 do not match any category (0%)
  Rules applied 2 times (40%)

  Rules :
  <Adv: "quelque"> (NumC, "peu")       }  2117
  <Adj>

  NP[cinquante personnes ]
  PNI  WNI  PGI  WGI  PNE  WNE  PGE  WGE  (<0 means plural/feminine)
  -6   -2   -9   -1   0    0    -7   -1
  ETRE[<SUBJ NP[cinquante personnes ]> étaient présentes ]
```

Fig. 21A

| quelque | cinquante | personnes | étaient | présente | |
|---|---|---|---|---|---|
| Adj, Adv | NumC | NC | VC | Adj, VC | ← 2110 |
| Adv | NumC | NC | VC | Adj | ← 2115 |
| (not considered) | Gender neutral Number plural | Gender feminine Number plural | Person 6 Tense présent | Gender feminine Number singular | ← 2120 |
| (not considered) | Noun phrase | | Verb phrase | | ← 2125 |
| | Subject of verb | | Verb | | ← 2130 |
| quelque | cinquante | personnes | étaient | présentes | ← 2135 |
| (not considered) | Gender feminine Number plural | Gender feminine Number plural | Person 6 Tense présent | Gender feminine Number plural | |

Fig. 21 B

EP 1 189 203 B1

```
------------------------------------------------
Original: ce sont les amis que j' ai aidés
Answer: (no change)

PDem    Det-PDem      __QG_____      ce      0
VC      VC            _V6_AE_____      sont
Det     Det-OD        __DF_____      les     5
NC      NC            /__ND_____      amis
ConjS   Adv-ConjS     _R_PN____QUE_G    que     2
PerS    PerS          __1PC_S____AP_    j'
VC      VC            /V1__AA_____      ai
VPp     VPp           /V__DP_____      aidés
8 words found
8 categorized (100%)
0 do not match any category (0%)
Rules applied 3 times (37.5%)

Rules :
<PDem>  (VC, OD, Prep, "pourquoi", "qui", "que", "qu'", Det-OD, "ne", "n'')
<Det>
<ConjS>

NP[ce ]
PNI   NNI   PGI   NGI   PNE   NNE   PGE   NGE  (<0 means plural/feminine)
0     0     2     1     -4    -1    0     0
ETRE[<SUBJ NP[ce ]> <OBJ NP[les amis ]> sont ]
NP[les amis ]
PNI   NNI   PGI   NGI   PNE   NNE   PGE   NGE  (<0 means plural/feminine)
-4    -2    0     1     0     0     0
CONJ[<REL NP[les amis ]> que ]
NP[j' ]
PNI   NNI   PGI   NGI   PNE   NNE   PGE   NGE  (<0 means plural/feminine)
1     1     0     1     1     1     0     0
AVOIR[<SUBJ NP[j' ]> <OBJ CONJ[<REL NP[les amis ]> que ]> ai aidés ]
```

Fig. 22A

```
-----------------------------------------------------
Original: tu devrais les avoir reçus
Answer: (no change)


PerS    PerS-VPp      _V2PCPS_____       tu          1
VC      VC            _V7_N_____        devrais
OD      Det-OD          OF_____        les         2
VI      NC-VI         /VINAIA_____        avoir       2
VPp     NC-VPp        _V_NOP_____        reçus       0
5 words found
5 categorized (100%)
0 do not match any category (0%)
Rules applied 4 times (80%)


Rules :
<PerS>
(VC, Prep) *(Adv, VPp) <OD> NC-VI
<VI>
(NC, NP, PerT, NC-VC, VC, VI, VPr, PerPS, PRel) *(Adv, Adj, VPp) <VPp>


NP(tu )
PNI   WNI   PGI   WGI   PNE   WNE   PGE   WGE (<0 means plural/feminine)
2     1     0     1     0     1     0     0
VP(<SUBJ NP(tu )> devrais )
NP(les )
PNI   WNI   PGI   WGI   PNE   WNE   PGE   WGE (<0 means plural/feminine)
-4    -1    0     0     0     -4    0     1
AVOIR(<SUBJ NP(tu )> <OBJ NP(les )> avoir reçus )
```

Fig. 22B

```
-----------------------------------------------------------
Original: les trois premières maquettes sont les seules qui soient présentables
Answer: (no change)

Det     Det-OD          __OF_____      les         5
NumC    NumC            N_P_____      trois
Adj     Adj-NC          _A_NB_____      premières   2
NC      NC              __NB_____      maquettes
VC      VC              _V6_AB_____      sont
Det     Det-OD          __OF_____      les         5
Adj     Adj             _A_B_____      seules
PRel    ConjS-FInt-PRel __PI____QUI_G     qui         D
VC      VC              _V6_JB_____      soient
Adj     Adj             _A_F_____      présentables
10 words found
10 categorized (100%)
0 do not match any category (0%)
Rules applied 4 times (40%)

Rules :
<Det>
<Adj> (NC, NP, NC-NumC, Et-NC, NC-VC, NC-VI, Adj-NC-VPr)
<Det>
(NC, NP, Adj, Part, PDem) *(Adv, VPp) <PRel>

NP[les trois premières maquettes ]
PMI     WMI     PGI     WGI     PHB     WHB     PGB     WGB   (<0 means plural/feminine)
-10     -4      -18     -2      -4      -1      0       0
ETRE(<SUBJ NP[les trois premières maquettes ]> <OBJ NP[les seules ]> sont )
NP[les seules ]
PMI     WMI     PGI     WGI     PHB     WHB     PGB     WGB   (<0 means plural/feminine)
-4      -2      0       -1      0       -2      0       0
NP[<REL NP[les seules ]> qui ]
ETRE(<SUBJ NP[les seules ]> soient présentables )
```

55

*Fig. 22C*

EP 1 189 203 B1

```
--------------------------------------------------
Original: lavés par les pluies ,\virgule les sols s' érodent
Answer: (no change)

VPp      VPp         _V__DP_____       lavés
Prep     Prep        _X_____PAR_G     par
Det      Det-OD      ___DF_____         les          5
NC       NC          ___NE_____         pluies
Pct      Pct         ___P__M__VIRGG       ,\virgule
Det      Det-OD      ___DF_____         les          5
NC       NC          ___ND_____         sols
PerR     ConjS-PerR  __3PI_R_____AP_     s'           1
VC       VC          /V6__T_____        érodent
9 words found
9 categorized (100%)
0 do not match any category (0%)
Rules applied 3 times (33.3333%)

Rules :
<Det>
<Det>
<PerR>


NP[lavés ]
PNI    NNI    PGI    NGI    PNE    NNE    PGE    NGE (<0 means plural/feminine)
0      -1     0      1      0      0      0      0
PP[par NP[les pluies ]]
PNI    NNI    PGI    NGI    PNE    NNE    PGE    NGE (<0 means plural/feminine)
-4     -2     -6     -1     0      0      0      0
CONJ[,\virgule ]
NP[les sols ]
PNI    NNI    PGI    NGI    PNE    NNE    PGE    NGE (<0 means plural/feminine)
-4     -2     5      1      0      -1     0      0
NP[s' ]
PNI    NNI    PGI    NGI    PNE    NNE    PGE    NGE (<0 means plural/feminine)
0      0      0      0      0      0      0      0
VP[<SOBJ NP[les sols ]> <OBJ NP[s' ]> érodent ]
```

Fig. 22 D

EP 1 189 203 B1